# EUROPEAN PATENT SPECIFICATION

(11) **EP 3 344 000 B1**
(45) Date of publication and mention of the grant of the patent: **29.01.2020**
(21) Application number: 16207517.0
(22) Date of filing: 30.12.2016
(51) Int. Cl.: H04W 76/16, H04W 88/06

(54) **MOBILE COMMUNICATION DEVICES AND METHODS IN MOBILE COMMUNICATION NETWORKS FOR SHARING A RECEIVER RESOURCE IN A DUAL SIM DEVICE**
MOBILKOMMUNIKATIONSGERÄTE UND -VERFAHREN IN MOBILKOMMUNIKATIONSNETZWERKEN ZUR GEMEINSAMEN NUTZUNG EINER EMPFÄNGERRESOURCE IN EINEM DUAL SIM GERÄT
DISPOSITIFS ET PROCÉDÉ DE COMMUNICATION MOBILE DANS LES RÉSEAUX DE COMMUNICATIONS MOBILES POUR PARTAGER UNE RESSOURCE RÉCEPTEUR DANS UN DISPOSITIF DUAL SIM

(43) Date of publication of application: 04.07.2018
(73) Proprietor: Intel IP Corporation, Santa Clara, CA 95054 (US)
(72) Inventor: STROBL, Stefan, 90857 Obermichelbach (DE); MENNCHEN, Ulrich, 85586 Poing (DE)
(74) Representative: Viering, Jentschura & Partner mbB Patent- und Rechtsanwälte

(56) References cited:
- US-A1- 2013 303 240
- US-A1- 2014 220 981
- US-A1- 2015 056 998
- US-A1- 2016 198 352

## Description

### Technical Field

Various aspects of this disclosure relate generally to a processing method for mobile communication networks and to a mobile terminal device in mobile communication.

### Background

Mobile phone designs that incorporate multiple Subscriber Identity Modules (SIMs) have recently increased in popularity. There exist numerous variations of such multi-SIM designs, which each may allow for different degrees of operation for each included SIM. For example, straightforward designs such as Dual-Sim Dual-Standby (DSDS) designs may allow for one SIM to transmit and/or receive while the other SIM remains in standby mode. More complex designs including Dual-Receive Dual-SIM Dual-Standby (DR-DSDS) designs may allow for two SIMs to concurrently receive but only transmit on a time-sharing basis while Dual-Sim Dual-Active (DSDA) designs may allow two SIMs to simultaneously transmit and receive in parallel.

There may exist certain performance degradation in multi-SIM designs due to the presence of multiple SIMs. As previously indicated, DSDS designs may only allow active operation of one SIM at a time, while the other SIM is relegated to a passive "standby" role. Accordingly, both reception and transmission resources must be shared on a time-sharing basis, which may lead to missed transmissions and receptions for one or both SIMs. DR-DSDS designs may similarly suffer in the uplink direction due to the sharing of transmission resources between both SIMs. Furthermore, receiver desensitization in DSDA and DR-DSDSdesigns may occur when one SIM is transmitting simultaneous to reception activity by the other SIM.

Similar co-existence problems may arise in mobile devices that support multiple radio access technologies, such as mobile devices that support traditional cellular communications in addition to e.g. Bluetooth and/or WiFi or mobile devices configured to be connected simultaneously to different wireless networks using the same SIM, such as the Single Radio LTE (SRLTE) devices capable of being connected simultaneously to LTE (Long Term Evolution) and CDMA networks or SGLTE (Simultaneous GSM and LTE) devices capable of being connected simultaneously to LTE (Long Term Evolution) and GSM (Global System for Mobile Communications) networks using the same SIM. Reception and transmission conflicts may also be prevalent in such designs, in particular where one radio access technology introduces interferences on another radio access technology or where multiple radio access technologies share transceiver resources. US 2014/0220981 A1 describes a DSDS (dual SIM) mobile device, in which a first SIM has an ongoing PS data transmission and a second SIM is in idle mode desiring to monitor paging or read system information from time to time. In the case that a trigger condition is detected (i.e. the second SIM needs to access the RX resource), then a connection release indication including reason and period is transmitted to the network to inform the network accordingly.
US 2015/0056998 A1 describes a DSDS (dual SIM) mobile device, in which a first SIM has a data connection and a second SIM is in idle mode desiring to monitor paging or read system information from time to time. In the case a trigger condition is detected (i.e. the second SIM needs to access the RX resource), then the device informs the network about the connection break. US 2016/0198352 A1 describes a multi-SIM device in which a deliberate acknowledgment procedure is performed during diversity tune-away periods to avoid being penalized by the link adaptation process. In said deliberate acknowledgment procedure, fast RLC NACK messages are sent to the eNB.

### Summary

The invention is defined by the subject-matter of the independent claims. Preferred embodiments are set out in the dependent claims.

Various examples relate to a processing method for mobile communication networks, to a mobile terminal device, and to a mobile communication network. Examples for better understanding the present invention are set out below and pertain to aspects of the disclosure.

A processing method for mobile communication networks may include: receiving, on a mobile terminal device, a first data block from a mobile communication network through a first receiving resource of the mobile terminal device, wherein the mobile terminal device is configured to receive a first radio connection of a first SIM and a second radio connection of a second SIM; and determining by the mobile terminal device if the first receiving resource of the mobile terminal device enters a sharing phase during which resource is shared between the first radio connection of the first SIM and the second radio connection of the second SIM; and transmitting by the mobile terminal device a first status report to the mobile communication network if the first receiving resource of the mobile terminal device enters the sharing phase. The processing method for mobile communication networks mentioned in this paragraph provides a first example.

The processing method for mobile communication networks may further optionally include: determining by the mobile terminal device if the first receiving resource of the mobile terminal device exits the sharing phase during which resource is shared between the first radio connection of the first SIM and the second radio connection of the second SIM; and transmitting by the mobile terminal device a second status report to the mobile communication network if the first receiving resource of the mobile terminal device exits the sharing phase. The features mentioned in this paragraph in combination with the first example provide a second example.

The first radio connection of the first SIM may optionally be an active radio connection and the second radio connection of the second SIM may optionally be in an idle radio connection. The features mentioned in this paragraph in combination with the first or the second example provide a third example.

The second idle radio connection of the second SIM may optionally have priority over the first active radio connection of the first SIM on the sharing of the first receiving resource of the mobile terminal device. The features mentioned in this paragraph in combination with the third example provide a fourth example.

The second idle radio connection of the second SIM may optionally include Public Land Mobile Network search. The features mentioned in this paragraph in combination with the third or fourth example provide a fifth example.

The second idle radio connection of the second SIM may optionally include paging reception. The features mentioned in this paragraph in combination with any of the third to fifth examples provide a sixth example.

The first active radio connection of the first SIM may optionally be a Long Term Evolution (LTE) radio connection. The features mentioned in this paragraph in combination with any of the third to sixth examples provide a seventh example.

The first active radio connection of the first SIM may optionally be a Universal Mobile Telecommunication System (UMTS) radio connection. The features mentioned in this paragraph in combination with any of the third to seventh examples provide an eighth example.

The first active radio connection of the first SIM may optionally be a Global System for Mobile Communications (GSM) radio connection. The features mentioned in this paragraph in combination with any of the third to eighth examples provide a ninth example.

The first data block may optionally be received by the Physical Layer associated with the first active radio connection of the first SIM if the first receiving resource of the mobile terminal device is not shared with the second radio connection of the second SIM. The features mentioned in this paragraph in combination with any of the third to ninth examples provide a tenth example.

The sharing phase may optionally include the first receiving resource of the mobile terminal device being utilized by the second idle radio connection of the second SIM. The features mentioned in this paragraph in combination with any of the third to tenth examples provide an eleventh example.

The first data block may optionally include a Radio Link Control Protocol Data Unit. The features mentioned in this paragraph in combination with any of the third to eleventh examples provide a twelfth example.

The first and the second status report may optionally include Radio Link Control status reports and may optionally be transmitted by the Radio Link Control layer associated with the first SIM of the mobile terminal device. The features mentioned in this paragraph in combination with any of the second to twelfth examples provide a thirteenth example.

The processing method for mobile communication networks may further optionally include receiving, on the mobile terminal device, a second data block from the mobile communication network through the first receiving resource of the mobile terminal device after the second status report has been transmitted. The features mentioned in this paragraph in combination with any of the second to thirteenth examples provide a fourteenth example.

The second data block may optionally be received by the Physical Layer associated with the first active radio connection of the first SIM of the mobile terminal device. The features mentioned in this paragraph in combination with the fourteenth example provide a fifteenth example.

The second data block may optionally include a Link Control Protocol Data Unit retransmitted by the mobile communication network to the mobile terminal device. The features mentioned in this paragraph in combination with the fourteenth example provide a sixteenth example.

Receiving, on the mobile terminal device, the first data block from the mobile communication network through the first receiving resource of the mobile terminal device may optionally include receiving the first data block within a predetermined receive time window. The features mentioned in this paragraph in combination with any of the second to sixteenth examples provide a seventeenth example.

The predetermined receive time window may optionally range from about 0 to about 200 ms. The features mentioned in this paragraph in combination with the seventeenth example provide an eighteenth example.

Determining if the first receiving resource of the mobile terminal device enters a sharing phase during which resource is shared between the first radio connection of the first SIM and the second radio connection of the second SIM may optionally include transmitting by the physical layer associated with the first SIM information at the beginning of the sharing phase to the Radio Link Control layer associated with the first SIM or information about the beginning of the sharing phase to the Radio Link Control layer associated with the first SIM. The features mentioned in this paragraph in combination with any of the second to eighteenth examples provide a nineteenth example.

Determining if the first receiving resource of the mobile terminal device exits the sharing phase during which resource is shared between the first radio connection of the first SIM and the second radio connection of the second SIM may optionally include transmitting by the physical layer associated with the first SIM information at the end of the sharing phase to the Radio Link Control layer associated with the first SIM or information about the end of the sharing phase to the Radio Link Control layer associated with the first SIM. The features mentioned in this paragraph in combination with any of the second to nineteenth examples provide a twentieth example.

The processing method for mobile communication networks may further optionally include receiving, on the mobile terminal device, a third data block from the mobile communication network through a second receiving resource of the mobile terminal device while the first receiving resource of the mobile terminal device is shared between the first radio connection of the first SIM and the second radio connection of the second SIM. The features mentioned in this paragraph in combination with any of the second to twentieth examples provide a twenty-first example.

The third data block may optionally include a Radio Link Control Protocol Data Unit. The features mentioned in this paragraph in combination with the twenty-first example provide a twenty-second example.

The third data block may optionally be received by the Physical Layer associated with the first active radio connection of the first SIM. The features mentioned in this paragraph in combination with the twenty-first example provide a twenty-third example.

The first radio connection and the second radio connection may optionally be connected to different Cellular Wide Area radio communication networks. The features mentioned in this paragraph in combination with any of the first to twenty-third examples provide a twenty-fourth example.

The mobile terminal device may optionally be a multi-SIM device configured according to a Dual-SIM Dual-Standby (DSDS) design. The features mentioned in this paragraph in combination with any of the first to twenty-fourth examples provide a twenty-fifth example.

A processing method for mobile communication networks may include: transmitting, by a node of a mobile communication network, a first data block to a mobile terminal device through a first receiving resource of the mobile terminal device, wherein the mobile terminal device is configured to receive a first radio connection of a first SIM and a second radio connection of a second SIM; and determining by the mobile terminal device if the first receiving resource of the mobile terminal device enters a sharing phase during which resource is shared between the first radio connection of the first SIM and the second radio connection of the second SIM; and receiving by the node of the mobile communication network a first status report transmitted by the mobile terminal device if the first receiving resource of the mobile terminal device enters the sharing phase. The processing method for mobile communication networks mentioned in this paragraph provides a twenty-sixth example.

The processing method for mobile communication networks may optionally further include: determining by the mobile terminal device if the first receiving resource of the mobile terminal device enters the sharing phase during which resource is shared between the first radio connection of the first SIM and the second radio connection of the second SIM; and receiving by the node of the mobile communication network a second status report transmitted by the mobile terminal device if the first receiving resource of the mobile terminal device exits the sharing phase. The features mentioned in this paragraph in combination with the twenty-sixth example provide a twenty-seventh example.

The first radio connection of the first SIM may optionally be an active radio connection and the second radio connection of the second SIM may optionally be in an idle radio connection. The features mentioned in this paragraph in combination with the twenty-seventh example provide a twenty-eighth example.

The second idle radio connection of the second SIM may optionally have priority over the first active radio connection of the first SIM on the sharing of the first receiving resource of the mobile terminal device. The features mentioned in this paragraph in combination with the twenty-eighth example provide a twenty-ninth example.

The second idle radio connection of the second SIM may optionally include Public Land Mobile Network search. The features mentioned in this paragraph in combination with the twenty-eighth or twenty-ninth example provide a thirtieth example.

The second idle radio connection of the second SIM may optionally include paging reception. The features mentioned in this paragraph in combination with any of the twenty-eighth to thirtieth examples provide a thirty-first example.

The first active radio connection of the first SIM may optionally be a Long Term Evolution (LTE) radio connection. The features mentioned in this paragraph in combination with the twenty-eighth example provide a thirty-second example.

The first active radio connection of the first SIM may optionally be a Universal Mobile Telecommunication System (UMTS) radio connection. The features mentioned in this paragraph in combination with any of the twenty-eighth to thirty-second examples provide a thirty-third example.

The first active radio connection of the first SIM may optionally be a Global System for Mobile Communications (GSM) radio connection. The features mentioned in this paragraph in combination with any of the twenty-eighth to thirty-third examples provide a thirty-fourth example.

The first data block may optionally be transmitted by the node of the mobile communication network to the mobile terminal device if the first receiving resource of the mobile terminal device is not shared between the first radio connection of the first SIM and the second radio connection of the second SIM. The features mentioned in this paragraph in combination with any of the twenty-eighth to thirty-fourth examples provide a thirty-fifth example.

The sharing phase may optionally include the first receiving resource of the mobile terminal device being utilized by the second idle radio connection of the second SIM. The features mentioned in this paragraph in combination with any of the twenty-eighth to thirty-fifth examples provide a thirty-sixth example.

The first data block may optionally include a Radio Link Control Protocol Data Unit. The features mentioned in this paragraph in combination with any of the twenty-eighth to thirty-sixth examples provide a thirty-seventh example.

The first and the second status report may optionally include Radio Link Control status reports and may optionally be transmitted by the Radio Link Control layer associated with the first SIM of the mobile terminal device. The features mentioned in this paragraph in combination with any of the twenty-eighth to thirty-seventh examples provide a thirty-eighth example.

The processing method for mobile communication networks may optionally further include transmitting, by the node of the mobile communication network, a second data block to the mobile terminal device, through the first receiving resource of the mobile terminal device after the second status report has been received by the node of the mobile communication network. The features mentioned in this paragraph in combination with any of the twenty-eighth to thirty-eighth examples provide a thirty-ninth example.

The second data block may optionally be received by the Physical Layer associated with the first active radio connection of the first SIM of the mobile terminal device. The features mentioned in this paragraph in combination with the thirty-ninth example provide a fortieth example.

The second data block may optionally include a Link Control Protocol Data Unit retransmitted by the node of the mobile communication network to the mobile terminal device. The features mentioned in this paragraph in combination with the fortieth example provide a forty-first example.

Transmitting, by the node of the mobile communication network, a first data block to a mobile terminal device through a first receiving resource of the mobile terminal device may optionally include transmitting the first data block within a predetermined transmit time window. The features mentioned in this paragraph in combination with any of the twenty-eighth to forty-first examples provide a forty-second example.

The predetermined transmit time window may optionally range from about 0 to about 200 ms. The features mentioned in this paragraph in combination with the forty-second example provide a forty-third example.

Determining if the first receiving resource of the mobile terminal device enters a sharing phase during which resource is shared between the first radio connection of the first SIM and the second radio connection of the second SIM may optionally include transmitting by the physical layer associated with the first SIM information at the beginning of the sharing phase to the Radio Link Control layer associated with the first SIM. The features mentioned in this paragraph in combination with any of the twenty-eighth to forty-third examples provide a forty-fourth example.

Determining if the first receiving resource of the mobile terminal device exits the sharing phase during which resource is shared between the first radio connection of the first SIM and the second radio connection of the second SIM may optionally include transmitting by the physical layer associated with the first SIM information at the end of the sharing phase to the Radio Link Control layer associated with the first SIM. The features mentioned in this paragraph in combination with any of the twenty-eighth to forty-fourth examples provide a forty-fifth example.

The processing method for mobile communication networks may optionally further include transmitting, by the node of the mobile communication network, a third data block to the mobile communication network through a second receiving resource of the mobile terminal device while the first receiving resource of the mobile terminal device is shared between the first radio connection of the first SIM and the second radio connection of the second SIM. The features mentioned in this paragraph in combination with any of the twenty-eighth to forty-fifth examples provide a forty-sixth example.

The third data block may optionally include a Radio Link Control Protocol Data Unit. The features mentioned in this paragraph in combination with the forty-sixth example provide a forty-seventh example.

The third data block may optionally be received by the Physical Layer associated with the first active radio connection of the first SIM. The features mentioned in this paragraph in combination with the forty-sixth or forty-seventh example provide a forty-eighth example.

The first radio connection and the second radio connection may optionally be connected to different Cellular Wide Area radio communication networks. The features mentioned in this paragraph in combination with any of the twenty-eighth to forty-eighth examples provide a forty-ninth example.

The mobile terminal device may optionally be a multi-SIM device configured according to a Dual-SIM Dual-Standby (DSDS) design. The features mentioned in this paragraph in combination with any of the twenty-eighth to forty-ninth examples provide a fiftieth example.

The node of a mobile communication network may optionally be a base station for a Long Term Evolution (LTE) radio access technology, or for a Universal Mobile Telecommunication System (UMTS) radio access technology, or for a Global System for Mobile Communications (GSM) radio access technology. The features mentioned in this paragraph in combination with any of the twenty-eighth to fiftieth examples provide a fifty-first example.

A processing method for mobile communication networks may include: receiving, on a mobile terminal device, a first data block from a mobile communication network through a first receiving resource of the mobile terminal device, wherein the mobile terminal device is configured to receive a first radio connection of a first SIM and a second radio connection of a second SIM and wherein the first radio connection of the first SIM is an active radio connection and the second radio connection of the second SIM is in an idle radio connection, and wherein the first data block is transmitted over the first radio connection of the first SIM; and determining by the mobile terminal device if the first receiving resource of the mobile terminal device enters a sharing phase during which resource is shared between the first SIM and the second SIM; and interrupting by the mobile terminal device the sharing phase after a predetermined delay time and for a predetermined gap time. The processing method for mobile communication networks mentioned in this paragraph provides a fifty-second example.

Determining if the first receiving resource of the mobile terminal device enters a sharing phase during which resource is shared between the first radio connection of the first SIM and the second radio connection of the second SIM may optionally include transmitting by the physical layer associated with the first SIM information at the beginning of the sharing phase to the Radio Link Control layer associated with the first SIM. The features mentioned in this paragraph in combination with the fifty-second example provide a fifty-third example.

The second idle radio connection of the second SIM may optionally include Public Land Mobile Network search. The features mentioned in this paragraph in combination with the fifty-second or the fifty-third example provide a fifty-fourth example.

The second idle radio connection of the second SIM may optionally include paging reception. The features mentioned in this paragraph in combination with any of the fifty-second to fifty-fourth examples provide a fifty-fifth example.

The first active radio connection of the first SIM may optionally be a Long Term Evolution (LTE) radio connection. The features mentioned in this paragraph in combination with any of the fifty-second to fifty-fifth examples provide a fifty-sixth example.

The first data block may optionally include a Radio Link Control Protocol Data Unit. The features mentioned in this paragraph in combination with any of the fifty-second to fifty-sixth examples provide a fifty-seventh example.

A mobile terminal device may include: a radio processing circuit configured to receive and process radio frequency signals; and one or more baseband modems configured to receive a first data block from a mobile communication network through a first receiving resource of the mobile terminal device, wherein the mobile terminal device is configured to receive a first radio connection of a first SIM and a second radio connection of a second SIM; and a determination circuit configured to determine if the first receiving resource of the mobile terminal device enters a sharing phase during which resource is shared between the first radio connection of the first SIM and the second radio connection of the second SIM; and a transceiver circuit configured to transmit a first status report to the mobile communication network if the first receiving resource of the mobile terminal device starts the sharing phase. The mobile terminal device mentioned in this paragraph provides a fifty-eighth example.

The first radio connection and the second radio connection may optionally be connected to different Cellular Wide Area radio communication networks. The features mentioned in this paragraph in combination with the fifty-eighth example provide a fifty-ninth example.

The mobile terminal device may optionally be configured to receive a first radio connection of the first SIM to a first Cellular Wide Area radio communication network simultaneously with a second radio connection of the first SIM to a second Cellular Wide Area radio communication network. The features mentioned in this paragraph in combination with the fifty-eighth or fifty-ninth example provide a sixtieth example.

The mobile terminal device may optionally be a multi-SIM device configured according to a Dual-SIM Dual-Standby (DSDS) design, and the first radio connection may optionally be a radio connection of a first SIM of the mobile terminal device and the second radio connection may optionally be a radio connection of a second SIM of the mobile terminal device. The features mentioned in this paragraph in combination with any of the fifty-eighth to sixtieth examples provide a sixty-first example.

A mobile communication network may include: a transceiver circuit configured to transmit a first data block to a mobile terminal device through a first receiving resource of the mobile terminal device, wherein the mobile terminal device is configured to receive a first radio connection of a first SIM and a second radio connection of a second SIM; and a determination circuit configured to determine if a first status report and a second status report have been transmitted by the mobile terminal device; and wherein the transceiver circuit is further configured to transmit a second data block to the mobile terminal device through the first receiving resource of the mobile terminal device after that the second status report has been transmitted. The mobile communication network mentioned in this paragraph provides a sixty-second example.

The first radio connection and the second radio connection may optionally be connected to different Cellular Wide Area radio communication networks. The features mentioned in this paragraph in combination with the sixty-second example provide a sixty-third example.

The mobile terminal device may optionally be a multi-SIM device configured according to a Dual-SIM Dual-Standby (DSDS) design, and the first radio connection may optionally be a radio connection of a first SIM of the mobile terminal device and the second radio connection may optionally be a radio connection of a second SIM of the mobile terminal device. The features mentioned in this paragraph in combination with the sixty-second or sixty-third example provide a sixty-fourth example.

The node may optionally be a base station for a Long Term Evolution (LTE) radio access technology, or for a Universal Mobile Telecommunication System (UMTS) radio access technology, or for a Global System for Mobile Communications (GSM) radio access technology. The features mentioned in this paragraph in combination with any of the sixty-second to sixty-fourth examples provide a sixty-fifth example.

A processing method for mobile communication networks may include: receiving, on a mobile terminal device, a first data block from a mobile communication network through a first receiving resource of the mobile terminal device, wherein the mobile terminal device is configured to receive a first radio connection and a second radio connection; and determining by the mobile terminal device if the first receiving resource of the mobile terminal device enters a sharing phase during which resource is shared between the first radio connection of the first SIM and the second radio connection of the second SIM; and transmitting by the mobile terminal device a first status report to the mobile communication network if the first receiving resource of the mobile terminal device enters the sharing phase. The processing method for mobile communication networks mentioned in this paragraph provides a sixty-sixth example.

The mobile terminal device may optionally be configured to receive a first radio connection to a first Cellular Wide Area radio communication network simultaneously with a second radio connection to a second Cellular Wide Area radio communication network. The features mentioned in this paragraph in combination with the sixty-sixth example provide a sixty-seventh example.

The first radio connection and the second radio connection may optionally be associated with a first SIM. The features mentioned in this paragraph in combination with the sixty-sixth or sixty-seventh example provide a sixty-eighth example.

The processing method for mobile communication networks may optionally further include: determining by the mobile terminal device if the first receiving resource of the mobile terminal device exits the sharing phase during which it is shared between the first radio connection and the second radio connection; and transmitting by the mobile terminal device a second status report to the mobile communication network if the first receiving resource of the mobile terminal device exits the sharing phase. The features mentioned in this paragraph in combination with the sixty-sixth or sixty-seventh example provide a sixty-ninth example.

The first radio connection may optionally be an active radio connection and the second radio connection may optionally be in an idle radio connection. The features mentioned in this paragraph in combination with any of the sixty-sixth to sixty-ninth examples provide a seventieth example.

The second idle radio connection may optionally have priority over the first active radio connection on the sharing of the first receiving resource of the mobile terminal device. The features mentioned in this paragraph in combination with any of the sixty-sixth to seventieth examples provide a seventy-first example.

The second idle radio connection may optionally include Public Land Mobile Network search. The features mentioned in this paragraph in combination with any of the sixty-sixth to seventy-first examples provide a seventy-second example.

The second idle radio connection may optionally include paging reception. The features mentioned in this paragraph in combination with any of the sixty-sixth to seventy-second examples provide a seventy-third example.

The first active radio connection may optionally be a Long Term Evolution (LTE) radio connection. The features mentioned in this paragraph in combination with any of the sixty-sixth to seventy-third examples provide a seventy-fourth example.

The first active radio connection may optionally be a Universal Mobile Telecommunication System (UMTS) radio connection. The features mentioned in this paragraph in combination with any of the sixty-sixth to seventy-fourth examples provide a seventy-fifth example.

The first active radio connection may optionally be a Global System for Mobile Communications (GSM) radio connection. The features mentioned in this paragraph in combination with any of the sixty-sixth to seventy-fifth examples provide a seventy-sixth example.

The sharing phase may optionally include the first receiving resource of the mobile terminal device being utilized by the second idle radio connection. The features mentioned in this paragraph in combination with any of the sixty-sixth to seventy-sixth examples provide a seventy-seventh example.

The first data block may optionally include a Radio Link Control Protocol Data Unit. The features mentioned in this paragraph in combination with any of the sixty-sixth to seventy-seventh examples provide a seventy-eighth example.

The first and the second status report may optionally include Radio Link Control status reports and are transmitted by the Radio Link Control layer of the mobile terminal device. The features mentioned in this paragraph in combination with any of the sixty-sixth to seventy-eighth examples provide a seventy-ninth example.

The processing method for mobile communication networks may optionally further include receiving, on the mobile terminal device, a second data block from the mobile communication network through the first receiving resource of the mobile terminal device after that the second status report has been transmitted. The features mentioned in this paragraph in combination with any of the sixty-sixth to seventy-ninth examples provide an eightieth example.

The second data block may optionally be received by the Physical Layer associated with the first active radio connection of the first SIM of the mobile terminal device. The features mentioned in this paragraph in combination with any of the sixty-sixth to eightieth examples provide an eighty-first example.

The second data block may optionally include a Link Control Protocol Data Unit retransmitted by the mobile communication network to the mobile terminal device. The features mentioned in this paragraph in combination with any of the sixty-sixth to eighty-first examples provide an eighty-second example.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects of this disclosure are described with reference to the following drawings, in which:
FIG. **1** shows a communication system according to an exemplary mobile communication standard;
FIG. **2** shows an exemplary radio cell arrangement;
FIG. **3** shows a high level architecture of an exemplary communication terminal for a DSDS system;
FIG. **4** shows a (first) timing chart illustrating missed subframes in multi-SIM context;
FIG. **5** is a diagram illustrating an example of data transmission between a multi SIM mobile terminal device and a mobile communication network;
FIG. **6** is a functional block diagram illustrating an exemplary multi SIM mobile terminal device including a first SIM, which may be in connected mode and a second SIM, which may be in idle mode.
FIG **7** is a diagram illustrating an exemplary sequence of events associated with the transmission of a data block when the receiving resource of a mobile terminal device is shared between a first SIM and a second SIM;
FIG. **8** is a functional block diagram illustrating an exemplary multi SIM mobile terminal device;
FIG **9** is a diagram illustrating an exemplary sequence of events associated with the transmission of a data block when the receiving resource of a mobile terminal device is shared between a first SIM and a second SIM;
FIG **10** is a schematic diagram illustrating an exemplary flowchart according to an aspect of this disclosure;
FIG **11** is a schematic diagram illustrating an exemplary flowchart according to another aspect of this disclosure;
FIG **12** is a functional block diagram illustrating an exemplary internal configuration of mobile terminal according to an aspect of the disclosure; and
FIG **13** is a functional block diagram illustrating an exemplary node of a mobile communication network.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims, if any, are used to expressly refer to a quantity greater than one. Accordingly, any phrases explicitly invoking the aforementioned words (e.g. "a plurality of [objects]", "multiple [objects]") referring to a quantity of objects is intended to expressly refer more than one of the said objects. The terms "group", "set", "collection", "series", "sequence", "grouping", "selection", etc., and the like in the description and in the claims, if any, are used to refer to a quantity equal to or greater than one, i.e. one or more. Accordingly, the phrases "a group of [objects]", "a set of [objects]", "a collection of [objects]", "a series of [objects]", "a sequence of [objects]", "a grouping of [objects]", "a selection of [objects]", "[object] group", "[object] set", "[object] collection", "[object] series", "[object] sequence", "[object] grouping", "[object] selection", etc., used herein in relation to a quantity of objects is intended to refer to a quantity of one or more of said objects. It is appreciated that unless directly referred to with an explicitly stated plural quantity (e.g. "two [objects]" "three of the [objects]", "ten or more [objects]", "at least four [objects]", etc.) or express use of the words "plural", "multiple", or similar phrases, references to quantities of objects are intended to refer to one or more of said objects.

As used herein, a "circuit" may be understood as any kind of logic (analog or digital) implementing entity, which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It is understood that any two (or more) of the described circuits may be combined into a single circuit with substantially equivalent functionality, and conversely that any single described circuit may be distributed into two (or more) separate circuits with substantially equivalent functionality. In particular with respect to the use of "circuitry" in the claims included herein, the use of "circuit" may be understood as collectively referring to two or more circuits.

A "processing circuit" (or equivalently "processing circuitry") as used herein is understood as referring to any circuit that performs an operation(s) on signal(s), such as e.g. any circuit that performs processing on an electrical signal or an optical signal. A processing circuit may thus refer to any analog or digital circuitry that alters a characteristic or property of an electrical or optical signal, which may include analog and/or digital data. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g. a processor or microprocessor). As utilized herein, "digital processing circuit(ry)" may refer to a circuit implemented using digital logic that performs processing on a signal, e.g. an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single a processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the "term" memory. It is appreciated that a single component referred to as "memory" or "a memory" may be composed of more than one different type of memory, and thus may refer to a collective component including one or more types of memory. It is readily understood that any single memory "component" may be distributed or/separated multiple substantially equivalent memory components, and vice versa. Furthermore, it is appreciated that while "memory" may be depicted, such as in the drawings, as separate from one or more other components, it is understood that memory may be integrated within another component, such as on a common integrated chip.

The term "base station" used in reference to an access point of a mobile communication network may be understood as a macro base station, micro base station, NodeB, evolved NodeBs (eNB), Home eNodeB, Remote Radio Head (RRH), relay point, etc.

As used herein, a "cell" in the context of telecommunications may be understood as a sector served by a base station. Accordingly, a cell may be a set of geographically co-located antennas that correspond to a particular sectorization of a base station. A base station may thus serve one or more "cells" (or sectors), where each cell is characterized by a distinct communication channel. Furthermore, the term "cell" may be utilized to refer to any of a macrocell, microcell, femtocell, picocell, etc.

It is appreciated that the ensuing description may detail exemplary scenarios involving mobile device operating according to certain 3GPP (Third Generation Partnership Project) specifications, notably Long Term Evolution (LTE) and Long Term Evolution-Advanced (LTE-A). It is understood that such exemplary scenarios are demonstrative in nature, and accordingly may be similarly applied to other mobile communication technologies and standards, such as WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The examples provided herein are thus understood as being applicable to various other mobile communication technologies, both existing and not yet formulated, particularly in cases where such mobile communication technologies share similar features as disclosed regarding the following examples.

For purposes of this disclosure, radio communication technologies may be classified as one of a Short Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced (LTE-A), CDMA, WCDMA, LTE-A, General Packet Radio Service (GPRS), Enhanced Data Rates for GSM Evolution (EDGE), High Speed Packet Access (HSPA), HSPA Plus (HSPA+), and other similar radio communication technologies.

The term "RAT system" as utilized herein refers to the hardware, software, and/or firmware components of a mobile device that support operation of at least one Radio Access Technology (RAT). A RAT system may thus include one or more microprocessors/microcontrollers and/or one or more processing circuits, where the one or more microprocessors/microcontrollers may be configured to execute program code for software and/or firmware modules to control the microprocessor/microcontrollers to operate in accordance with the protocol stack (Layer 2 and 3) and/or physical layers (Layer 1) of a particular radio access technology. The microprocessors/microcontrollers may be configured to control the one or more processing circuits and any additional components in accordance with control logic provided by the software/firmware modules defined in the program code. It is appreciated that the RAT systems for multiple RATs may be integrated, such as in the case of a multi-mode baseband modem configured to support operation of more than one RAT. Accordingly, one or more microprocessors/microcontrollers, processing circuits, and/or software/firmware modules may be shared between multiple RAT systems. Such may include unified protocol stacks (Layers 2 and 3) and/or unified physical layers (Layer 1). A multi-mode RAT system may thus refer to one or more microprocessors/microcontrollers and one or more processing circuits that cooperatively support multiple RATs, such as in accordance with master and slave RAT roles; however it is appreciated that the term "RAT system" encompasses both single- and multi-mode RAT systems. A RAT system configured for a specific radio access technology may be denoted as e.g. an LTE system, a UMTS system, a GSM system, a Bluetooth system, a WiFi system, etc. A baseband modem may be referred to as a RAT system; however it is appreciated that a multi-mode baseband modem may be composed of multiple RAT systems, e.g. at least one RAT system for each radio access technology supported by the baseband modem, where each RAT system in a multi-mode baseband modem may be discrete or integrated relative to the other RAT systems.

The term "network" as utilized herein, e.g. in reference to a communication network such as a mobile communication network, is intended to encompass both an access component of a network (e.g. a radio access network (RAN) component) and a core component of a network (e.g. a core network component).

As utilized herein, the term "radio idle mode" or "radio idle state" used in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct and indirect transmission. Similarly, the term "receive" encompasses both direct and indirect reception unless explicitly specified.

Multi-SIM designs may need to address timing conflicts caused by the operation of multiple SIMs. For example, both Dual-SIM Dual-Standby (DSDS) and Dual-Receive Dual-Sim Dual-Standby (DR-DSDS) designs may need to share reception and/or transmission resources between two SIMs, such as on a time-sharing basis in which only one SIM can receive and/or transmit at a given point in time. Similarly, multi-SIM designs that allow for one SIM to transmit simultaneously to the other SIM receiving (which may include DSDA, DR-DSDS, and DSDS depending on the specifics of each design) may need to limit transmission resources to avoid receiver desensitization, such as by scheduling lapses in transmission (i.e. "gaps") to reduce reception interference.

Accordingly, multi-SIM designs may minimize timing conflicts between each SIM by scheduling transmission and/or reception operations for each SIM in order to minimize missed or corrupted transmission and reception occasions. However, even careful scheduling may still result in certain missed or corrupted transmission and/or reception occasions for all SIMs. For example, as previously indicated, a DSDS design may share a single set of receiver and transmitter resources between two independent SIMs. Accordingly, only one of the SIMs may receive and/or transmit at a time. It may therefore be unlikely for each SIM to be able to complete each scheduled transmission and reception occasion while participating in a transmission/reception time-sharing scheme with the other SIM, e.g. when one or both SIMs are in a radio active state.

Similar conflicts may occur between other radio access technologies, such as e.g. between a Cellular Wide Area radio access technology and a Short Range radio access technology (e.g. LTE and WiFi, LTE and Bluetooth, etc.), between two Short Range radio access technologies, etc. For example, a mobile terminal may be configured to support both an LTE radio connection and a WiFi radio connection, where certain LTE bands may interfere with WiFi bands. Alternatively, a mobile terminal may share transceiver resources between multiple such radio access technologies, and may accordingly not be able to concurrently perform radio activity for each radio access technology. Accordingly, there may exist reception and transmission conflicts in numerous mobile device designs.

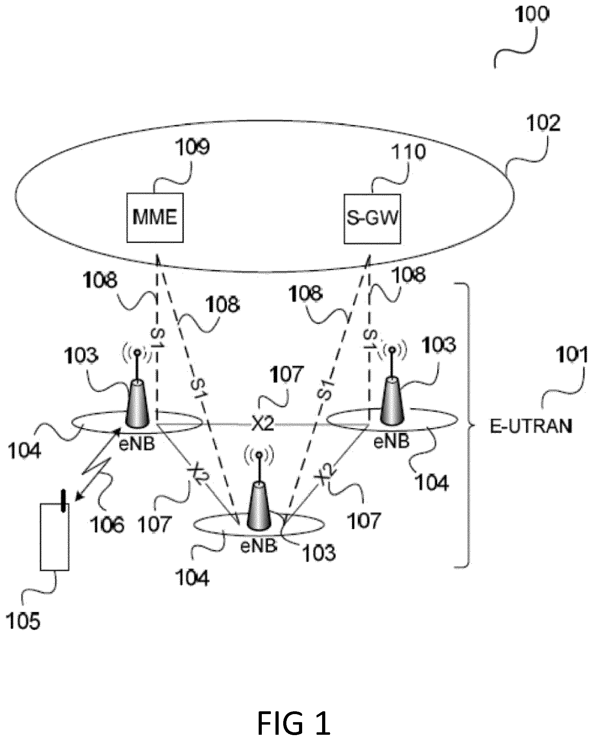

FIG. **1** shows an exemplary communication system **100**.

The communication system **100** may be a cellular mobile radio communication system (also referred to as cellular radio communication network in the following) including a radio access network (e.g. an UTRAN (UTMS (Universal Mobile Communication System) Terrestrial Radio Access Network) according to UMTS, or an E-UTRAN (Evolved UMTS Terrestrial Radio Access Network) according to LTE (Long Term Evolution), or LTE-Advanced) **101** and a core network (e.g. an EPC, Evolved Packet Core, according to LTE, or LTE-Advanced) **102**. The radio access network **101** may include one or more (mobile radio) base stations (e.g. base transceiver stations or home base stations such as NodeBs, NBs according to UMTS or eNodeBs, eNBs, Home eNodeBs, HeNBs according to LTE, or LTE-Advanced) 103. Each base station **103** may provide radio coverage for one or more mobile radio cells 104 of the radio access network **101**. In other words, the base stations **103** of the radio access network **101** may span different types of cells **104** (e.g. macro cells, femto cells, pico cells, small cells, open cells, closed subscriber group cells, hybrid cells, for instance according to LTE, or LTE-Advanced). It should be noted that examples described in the following may also be applied to communication networks other than LTE communication networks, e.g. communication networks according to UMTS, GSM (Global system for Mobile Communication), EDGE (Enhanced Data Rates for GSM Evolution), General Packet Radio Service (GPRS), High Speed Packet Access (HSPA), etc.

A mobile radio communication terminal (e.g. a User Equipment (UE)) **105** located in a mobile radio cell **104** may communicate with the core network **102** and with other mobile radio communication terminals **105** via the base station **103** providing radio coverage in (in other words operating) the mobile radio cell **104**. In other words, the base station **103** operating the mobile radio cell **104** in which the mobile terminal **105** is located may provide the E-UTRAN user plane terminations including the PDCP (Packet Data Convergence Protocol) layer, the RLC (Radio Link Control) layer and the MAC (Medium Access Control) layer and control plane terminations including the RRC (Radio Resource Control) layer towards the mobile radio communication terminal **105**.

Control and user data may be transmitted between a base station **103** and a mobile radio communication terminal **105** located in the mobile radio cell **104** operated by the base station **103** over the air interface **106** on the basis of a multiple access method. On the LTE air interface **106**, different duplex methods, such as FDD (Frequency Division Duplex) or TDD (Time Division Duplex), may be deployed.

The base stations **103** are interconnected with each other by a first interface **107**, e.g. an X2 interface. The base stations **103** are also connected by a second interface **108**, e.g. an S1 interface, to the core network **102**, e.g. to an MME (Mobility Management Entity) **109** via an SI-MME interface **108** and to a Serving Gateway (S-GW) 110 by an S1-U interface **108**. The SI interface **108** may support a many-to-many relation between MMEs/S-GWs **109**, **110** and the base stations **103**, i.e. a base station **103** may be connected to more than one MME/S-GW **109**, **110** and an MME/S-GW **109**, **110** may be connected to more than one base station **103**. This may enable network sharing in LTE.

For example, the MME **109** may be responsible for controlling the mobility of mobile radio communication terminals located in the coverage area of E-UTRAN, while the S-GW **110** may be responsible for handling the transmission of user data between mobile radio communication terminals **105** and the core network **102**.

In case of LTE, the radio access network **101**, i.e. the E-UTRAN **101** in case of LTE, may be seen to include or essentially consist of the base station **103**, i.e. the eNBs **103** in case of LTE, providing the E-UTRAN user plane (PDCP/RLC/MAC) and control plane (RRC) protocol terminations towards the UE **105**.

Each base station **103** of the communication system **100** may control communications within its geographic coverage area, namely its mobile radio cell **104** that is ideally represented by a hexagonal shape. When the mobile radio communication terminal **105** is located within a mobile radio cell **104** and is camping on the mobile radio cell **104** (in other words is registered with a Tracking Area (TA) assigned to the mobile radio cell **104**) it communicates with the base station **103** controlling that mobile radio cell **104**. When a call is initiated by the user of the mobile radio communication terminal **105** (mobile originated call) or a call is addressed to the mobile radio communication terminal **105** (mobile terminated call), radio channels are set up between the mobile radio communication terminal **105** and the base station **103** controlling the mobile radio cell **104** in which the mobile station is located. If the mobile radio communication terminal **105** moves away from the original mobile radio cell **104** in which a call was set up and the signal strength of the radio channels established in the original mobile radio cell **104** weakens, the communication system **100** may initiate a transfer of the call to radio channels of another mobile radio cell **104** into which the mobile radio communication terminal **105** moves.

In practice, a plurality of mobile radio communication networks of the same technology (but e.g. different mobile radio network operators (MNOs)) and/or different mobile radio technologies (but e.g. the same or different mobile radio network operators (MNOs)) including a radio access network **101** and a core network **102** as described above are provided by different operators such that the coverage areas of the communication networks overlap, i.e. a mobile radio communication terminal **105** may be located within a mobile radio cell **104** operated by a base station **103** belonging to a first mobile radio communication network, e.g. of a first operator (e.g. a first MNO) and at the same time be located within a radio cell **104** operated by a base station **103** belonging to a second mobile radio communication network, e.g. of a second operator (e.g. a second MNO).

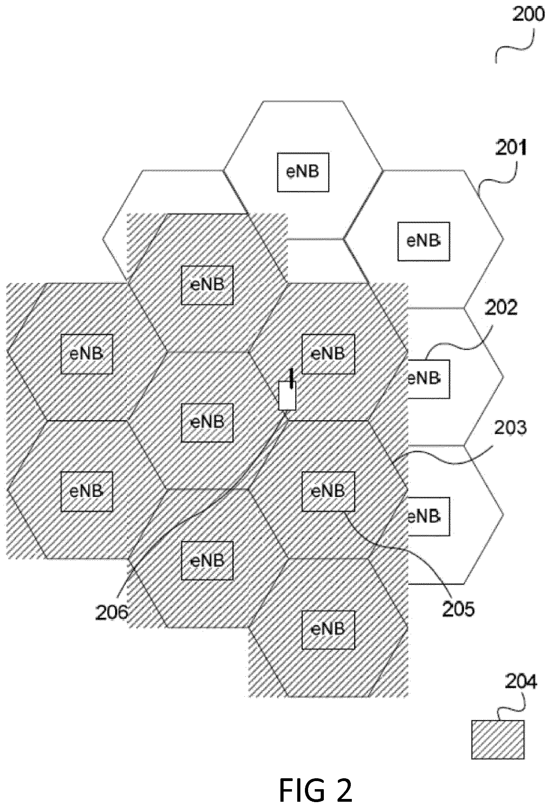

**FIG. 2** shows an exemplary radio cell arrangement **200**.

The radio cell arrangement **200** includes a first plurality of mobile radio cells **201** (shown without hatching) operated by a plurality of first base stations **202** of a first communication network, and a second plurality of mobile radio cells **203** indicated by a hatching **204** operated by a plurality of second base stations **205** of a second communication network. Although all base stations **205** are indicated as eNBs in this example, the first communication network and the second communication network may use the same or different radio access technologies (RATs) of e.g.: LTE, GSM, UMTS etc.

As illustrated, the second plurality of mobile radio cells **203** overlaps the first plurality of mobile radio cells **204** such that a mobile radio communication terminal **105** located in the overlapping area may connect to both the first communication network and to the second communication network, e.g. may both register with a base station **202** of the first communication network and a base station **205** of the second communication network.

For being able to use both the first communication network and the second communication network, the mobile radio communication terminal **105** may include two or more subscriber identity modules, e.g. SIMs or USIMs (Universal Subscriber Identity Modules). The mobile radio communication terminal **105** may be a multi-SIM device capable of communicating via two or more communication networks. The two or more communication networks may be of the same radio access technology type, the same network operator, different technology type, different network operator, or a combination thereof.

Multi-SIM offers a variety of operation modes. Considering two SIM cards, two main levels of differentiation are Dual-SIM Dual Active (DSDA) and Dual-SIM Dual Standby (DSDS). DSDA has two full modems, one for each SIM card, with receive and transmit capability operating simultaneously for independent services, e.g. one service for voice and one service for data. On the other hand, DSDS has a single modem which is shared between two SIM cards, such that both SIMs are in RRC standby/idle mode and can simultaneously receive paging for communication transactions.

The communication transactions may be carried out between the core network **102** of the communication system **100** and the mobile radio communication terminal **105**. The communication transactions, for example, may be a voice call, a delivery of a text message, or a procedure used in MME (Mobility Management Entity) **109** for locating the mobile radio communication terminal **105**. Other types of communication transactions may also be carried out between the core network **102** of the communication system 100 and the mobile radio communication terminal **105**.

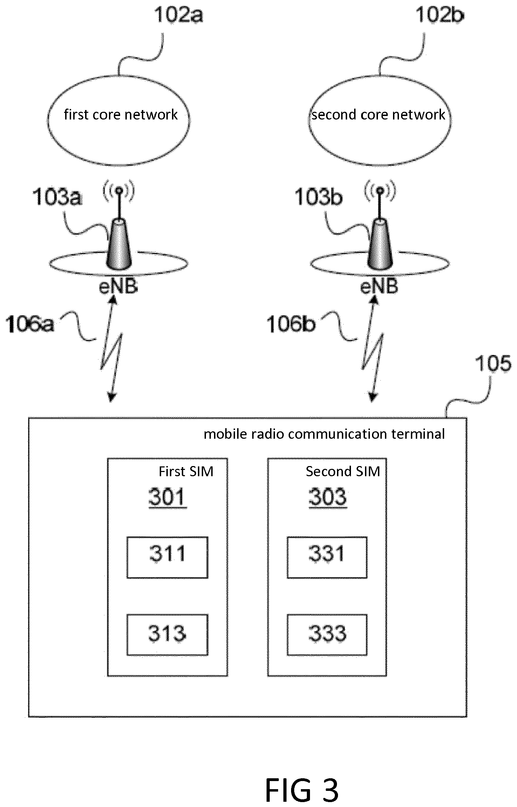

FIG. 3 shows a high level architecture of an exemplary mobile radio communication terminal **105** and a connection between the mobile radio communication terminal **105** and a plurality of mobile radio communication networks.

The mobile radio communication terminal **105** may include a first SIM **301** and a second SIM **303**.

The first SIM **301** may include a first controller **311** and a first memory **313** configured to store a first subscriber identity. The first subscriber identity, for example, may be an International Mobile Subscriber Identity (IMSI) number assigned exclusively to the first SIM **301**. The IMSI number may be used by an operator of a mobile radio communication network for identifying the first SIM **301**. The first subscriber identity, for example, may include a plurality of IMSIs. Each of the IMSIs may be assigned exclusively to the first SIM **301**.

The second SIM **303** may include a second controller **331** and a second memory **333** configured to store a second subscriber identity. The second subscriber identity, for example, may be an International Mobile Subscriber Identity (IMSI) number assigned exclusively to the second SIM **303**. The IMSI number is used by an operator of a mobile radio communication network for identifying the second SIM **303**. The second subscriber identity, for example, may include a plurality of IMSIs. Each of the IMSIs may be assigned exclusively to the second SIM **303**.

As shown in FIG. **3**, The first SIM **301** may be associated with a first mobile radio communication network which may include a first core network **102a** and a first base station **103a**, and the second SIM **303** may be associated with the second mobile radio communication network which may include a second core network **102b** and a second base station **103b**. Control and user data may be transmitted between the first base station 103a and the first SIM **301** over a first air interface **106a**. Similarly, control and user data may be transmitted between the second base station **103b** and the second SIM **303** over a second air interface **106b**. The first SIM **301** and the second SIM **303** may be perceived by the first and second mobile radio communication networks, respectively, as a mobile radio communication terminal **105** having an IMSI number as an exclusive identification. As such, the first SIM **301** and second SIM **303** may receive paging for mobile radio communication transactions (e.g.: a voice call, a delivery of text message, etc.) from the first and second mobile radio communication networks, respectively.

Once an incoming call for one of the SIMs **301**, **303** is detected in the DSDS device **105**, there are various ways for the mobile radio communication terminal **105** to react on the incoming call depending on the type of the call and the status of the respective other SIM **301**, **303** (e.g. standby, in a call, etc.). In a case that two independent receive paths are present in the mobile radio communication terminal **105**, e.g. the DSDS device **105**, e.g. due to DL (downlink) Carrier Aggregation support, they can be used independently in RRC idle mode to receive the paging of the two SIMs **301**, **303**. This is also called Dual Receive DSDS (DR-DSDS).

The mobile radio communication terminal **105** may also use only one receive path to receive the paging for both SIMs **301**, **303** (e.g. operated on two different mobile radio communication networks). The receive path is shared in an intelligent manner between both SIMs **301**, **303**. For instance, one of the SIMs **301**, **303** may be configured to operate in an RRC active mode, i.e. having an active data connection, while the other SIM **301**, **303** may be configured to operate in an RRC idle mode. In this case, the RRC inactive (idle) SIM may 'steal' (in other words "borrow" or "use") the receive path from the active SIM for a predetermined period of time to receive the paging and/or to update (or register) its location with the surrounding mobile radio cells in a tracking area (TA), which are necessary to maintain basic RRC idle mode mobility. This behavior is also called Data versus Paging (DvP) or enhanced Data versus Paging (eDvP). DvP allows only paging reception on the second SIM, whereas eDvP allows full RRC idle mode mobility, that is possible without sending data, on the second SIM. Both of the SIMs may also be in an RRC idle mode at the same time with only one receive path.

The SIM operating in the RRC idle mode may wake up for a predetermined period of time at a regular interval (periodicity) to listen to paging from a base station of the associated mobile radio communication network and/or to update its location with surrounding mobile radio cells. During this predetermined period of time, the SIM in the RRC active mode may not have radio access to its associated mobile radio communication network. In various aspects of this disclosure, the predetermined period of time at the regular interval is selected or predefined or determined in accordance with a paging procedure of the associated communication network the SIM connected to. The example, the predetermined period of time may be in accordance to the paging procedures of a respective mobile communication network standard, e.g. GMS, UMTS, LTE or other mobile communication network standards provided. In various aspects of this disclosure, the predetermined period of time at the regular interval is in accordance to the Tracking Area Update (TAU) procedure of the associated communication network the SIM connected to. For example, the predetermined period of time may be in accordance to the TAU procedures of a respective mobile communication network standard, e.g. GMS, UMTS, LTE or other mobile communication network standards provided.

Whenever the SIM in the RRC idle mode wakes up to listen to the paging and/or to update its location with the surrounding mobile radio cells using the single receive path of the mobile radio communication terminal **105** at the predetermined period of time while there is an ongoing packet transmission on the SIM in the RRC active mode, the SIM in the RRC active mode may not be able to receive and hence decode the packet or packets transmitted by the base station of its associated mobile radio communication network. As a result, the packet or packets is/are discarded by the mobile radio communication terminal **105** and therefore no acknowledgement (ACK) messages is sent to the base station by the SIM in the RRC active mode when the SIM in the RRC active mode gains radio access to its associated mobile radio communication network. Upon not receiving the ACK message(s), the base station may perform a re-transmission of the packet(s) sending the same copy of the "lost" packet to the SIM in the RRC active mode. The re-transmission may be a copy of the lost packet, the same data transmitted through multiple frames, the data transmitted using a different redundancy version specified in a transport format, or any combination thereof. The re-transmission of the packet(s) may be in accordance to the same or another transport format chosen by the base station and/or mobile radio communication terminal. The SIM in the RRC active mode will be able to receive and decode the re-sent packet(s) so long as the re-transmission time does not coincide with the predetermined period of time the SIM in RRC idle mode receiving the paging and/or updating its location with surrounding mobile radio cells. Upon successfully receiving and decoding the re-sent packet(s), the SIM in the RRC active mode sends one or more acknowledgement (ACK) messages to the base station of its associated mobile radio communication network.

The SIM in the active mode may be requested by the base station to periodically send a measurement report to the base station. The base station may utilize the measurement report received on a periodic basis for adapting its transmission to match the capability of the mobile radio communication terminal **105**. The measurement report may include, among others, a signal quality indication and block error rate. The time-based signal quality indication may exhibit irregularities at a predetermined period of time which correspond to weak signals. During the predetermined period of these weak signals, the SIM in the RRC active mode may not be able to receive and decode the packet or packets transmitted by a base station, resulting in packet loss and re-transmission of the lost packet.

The discarded one or more packets result in wasted radio resources in terms of overall base station throughput. Furthermore, packet loss and triggering of re-transmission usually translate into a non-optimized behaviour of the connection(s) due to the base station settings being minded for single SIM devices, instead of Multi-SIM devices.

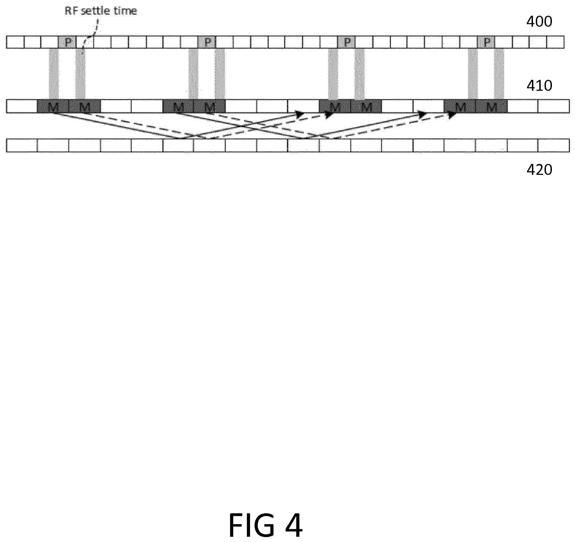

FIG. **4** shows timing charts **400-420** which illustrate an exemplary scenario in which a first SIM in a DSDS design may miss multiple reception occasions due to reception resource sharing with a second SIM. In the exemplary scenario illustrated in FIG. **4**, the first SIM (timing charts **410** and **420)** may be a first Long Term Evolution (LTE) SIM, which may be e.g. only capable of supporting LTE communications or e.g. may be capable of supporting multiple Radio Access Technologies (RAT) with LTE currently serving as the master RAT. The second SIM (timing chart **400**) may be a second Long Term Evolution (LTE) SIM. Both the first SIM and the second SIM may be included in a single mobile device (as will be later detailed), and may both be configured to communicate with respective mobile communication networks via a Radio Access Network (RAN) interface of each respective mobile communication network, such as via a wireless radio interface with one or more base stations.

As depicted in FIG. **4**, timing chart **400** may correspond to downlink subframes of the second SIM, while timing charts **410** and **420** may correspond to downlink and uplink subframes, respectively, of the first SIM (e.g. LTE subframes each of 1 ms in duration). For simplicity, the description may collectively refer to all such scheduling time periods as a "subframe", which is thus understood as referring to a scheduling time period for any radio access technology. In the following description of the exemplary scenario of FIG. 4, the first SIM may be in a radio active state while the second SIM may be in an idle radio state. However, it is appreciated that alternatively the first SIM and the second SIM may both be in a radio active state or may both be in a radio idle state, as both such scenarios may include time periods in which one or both SIMs may need to receive scheduled downlink data from the network.

The second SIM may need to perform certain downlink reception operations in accordance with the current radio state of the second SIM, e.g. radio idle state in the exemplary scenario of FIG. 4. For example, the second SIM may need to read scheduled paging occasions, read scheduled system information, and perform radio measurements (e.g. intra-frequency, inter-frequency, and/or inter-RAT depending on the presence of any slave RATs for the second SIM). The second SIM may have some flexibility in performing certain reception operations while having limited or no flexibility in scheduling other reception operations. For example, the network may transmit paging and system information messages only during certain predetermined time periods. Accordingly, the second SIM may need to perform reception during these time periods in order to read paging occasion and system information. In contrast, the second SIM may be able to perform radio measurements on a more flexible basis, as such radio measurements may not need to performed during a specific time period designated by the network (although be somewhat limited as to not conflict with other scheduled reception activity in the case of inter-frequency and inter-RAT measurements). Accordingly, the second SIM may have some flexibility in performing radio measurements while only limited or no flexibility in reading paging occasions and system information.

As shown in FIG. **4**, the second SIM may need to periodically read paging occasions transmitted by the network (denoted as light gray "P" subframes on timing chart **400**). The scheduling for the paging occasions may be determined by the network, such as according to a predefined scheduling period, and accordingly the second SIM may be required to listen to read the paging occasions in order to identify whether further downlink data is scheduled for the second SIM.

Accordingly, in a DSDS design, the second SIM may require access to shared reception resources (e.g.: shared receive chain) during the scheduled paging occasions in order to receive and read the paging occasions. As a result, the first SIM may not have access to the shared reception resources during the time periods in which the second SIM is granted access to the reception resources.

Furthermore, the shared reception resources may not be capable of instantaneously switching between reception for the first SIM and reception for the second SIM. For example, an RF transceiver component may need to re-calibrate (such as e.g. filter tuning) to perform the switch between reception for the first SIM to reception for the second SIM (and vice versa). As depicted in FIG. **4**, there may thus exist an RF settling time which includes a time window in which the shared reception resources switch from reception for the first SIM to reception for the second SIM, and subsequently back to reception for the first SIM.

The first SIM may therefore experience time periods during which reception for the first SIM is suspended. Accordingly, the first SIM may miss certain subframes during the suspended time periods as shown in FIG. **4** (denoted as dark gray "M" subframes on timing chart **410**). Downlink data blocks for the first SIM contained in the missed subframes may thus be lost. The term "data block" as used herein may refer to the data contained in a single subframe, e.g. a Transport Block in an LTE context. However, this is not considered limiting in nature, and "data block" may additionally include blocks of data that do not exactly correspond to a subframe, such as two subframes of data, a half-subframe of data, etc.

The first SIM may therefore need to receive "retransmissions" of the data contained in each missed subframe. LTE, for example, may utilize a Hybrid Automatic Repeat Request (HARQ) retransmission scheme. In such a HARQ retransmission scheme, an LTE User Equipment (UE) may transmit an Acknowledgement (ACK) or Non-Acknowledgement

(NACK) in response to each downlink data block (i.e. one subframe of data; "transport block" in an LTE context) to signal to the network that the data block was successfully or unsuccessfully received, respectively. In accordance with a frequency division duplexing (FDD) context as specified by the 3^{rd} Generation Partnership Project (3GPP), an LTE UE may transmit an ACK/NACK for a data block in the fourth subframe following the scheduled initial downlink subframe of the data block (or e.g. between 4-13 subframes for a time division duplexing (TDD) LTE context). A 4-subframe ACK/NACK delay is depicted in FIG. 4 by the arrows between timing charts **410** and **420**.

As the first SIM will lose the data blocks in the missed subframes due to the reception activity of the second SIM, the first SIM may subsequently transmit NACKs (on uplink timing chart **420**) to the network during the 4^{th} subframe following each missed data block, thus signaling to the network that a retransmission of the missed data block is required. Accordingly, the network may receive the NACK transmitted by the first SIM and proceed to retransmit the missed data blocks. As will be detailed, the first SIM may additionally miss subframes for reasons not directly related to radio activity of the second SIM, such as due to poor downlink channel quality. The first SIM may similarly transmit NACKs in response to unsuccessful reception of these subframes.

In accordance with an LTE context as specified by 3GPP, downlink HARQ retransmissions may be asynchronous. Accordingly, following transmission of a NACK an LTE UE may not have specific prior knowledge of when the network will perform the retransmission. Accordingly, the network may retransmit the missed subframe anytime within 8-50 subframes (8-50 ms) following the initial missed subframe, e.g. at least 4 ms following transmission of a NACK, where the network may provide an indication control information in a given subframe (e.g. Physical Downlink Control Channel (PDCCH)) specifying that the given subframe contains the retransmitted data block. Each data block and retransmitted data block may contain identification information (or may be included along with control information containing identification information), thus allowing an LTE UE to identify each retransmitted data block.

Returning to the exemplary scenario of FIG. **4**, the first SIM may transmit a NACK to the network in the 4^{th} subframe following each missed data block. As depicted by the arrows between timing charts **410** and **420** in FIG. **4****,** the network may then retransmit the missed data block a certain number of subframes following the NACK (and the initially missed subframe). For example, if the network is experiencing high load conditions, the network may perform the retransmission as soon as possible, e.g. in the 4^{th} subframe following the NACK (i.e. the 8^{th} subframe following the initially missed subframe). However, depending on the reception activity of the second SIM required to receive paging occasions, the first SIM may not be able to receive any data during the retransmission subframe. Accordingly, the first SIM may miss the initial data block in addition to the retransmitted data block. The first SIM may thus need to transmit another NACK and attempt to receive a further retransmission of the data block. It is appreciated that similar situations may occur in which reception activity by the second SIM causes the first SIM to miss multiple transmissions (including retransmissions) of the same data block (as opposed to the initial transmission subframe and an immediately following retransmission subframe as detailed immediately above). Each missed transmission and retransmission may warrant further retransmissions, thus measurably decreasing throughput. It is also appreciated that the first SIM may miss subframes due to other reasons in addition to radio activity by another SIM on shared transceiver resources, such as poor channel quality, Out-of-coverage (OOC) scenarios, etc. Accordingly, such additional missed data blocks may require similar retransmissions, and may align with radio activity by another SIM in order to cause multiple retransmissions of the same data block.

Such timing considerations may additionally apply in the uplink direction. For example, a multi-SIM design may allow for one SIM to transmit concurrently to the other SIM receiving. However, transmission by one SIM concurrent to reception by the other SIM may lead to receiver desensitization, in which transmission for one SIM interferes with the reception for the other SIM. Returning to the exemplary scenario of FIG. **4**, the first SIM may be capable of transmitting at the same time that the second SIM is receiving. However, this may introduce interference on reception by the second SIM. Accordingly, transmission for the first SIM may need to be controlled to ensure that interference on reception for the second SIM is minimized, such as by either scheduling transmission gaps for the first SIM during time periods in which the second SIM is scheduled to receive. Accordingly, the first SIM may not be able to transmit simultaneous to reception activity by the second SIM, such as time periods during which the second SIM is scheduled to receive paging occasions as detailed regarding FIG. **4**.

Accordingly, the first SIM may not be able to perform any transmission during certain time periods. However, the first SIM may need to transmit ACKs and/or NACKs in response to received transmissions, such as during the 4^{th} subframe following each received subframe. The first SIM may therefore not be able to transmit an ACK/NACK during subframes which the second SIM is receiving, which may as a result severely disrupt downlink HARQ procedures and lead to further retransmissions by the network as no feedback was received.

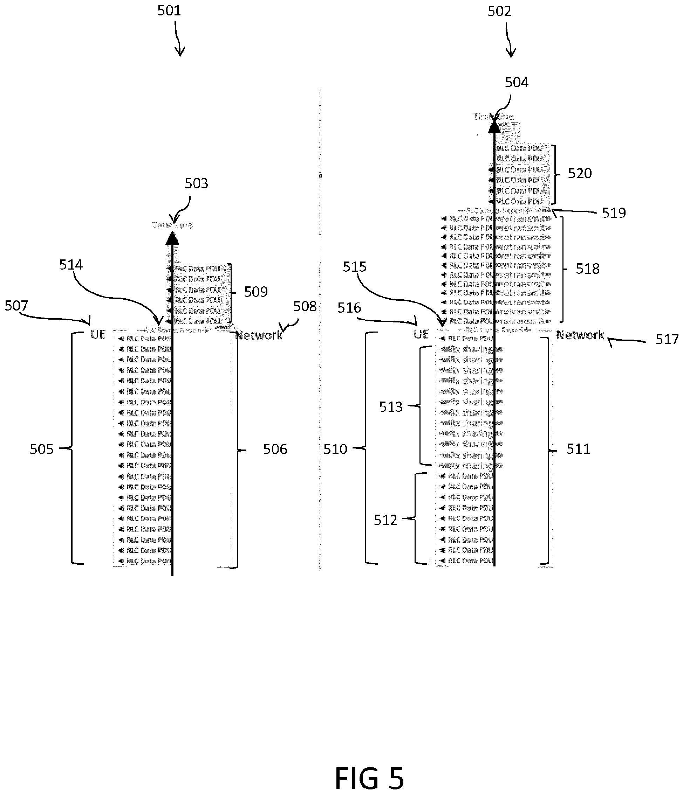

FIG. **5** is a diagram illustrating an example of data transmission between a multi SIM mobile terminal device 507 (User Equipment, UE) and a mobile communication network 508 in a first case 501 in which a receiving resource of the mobile terminal device is not shared between the first SIM 1 and the second SIM 2, and in a second case 502 in which the receiving resource of the mobile terminal device is shared between the first SIM 1 and the second SIM 2. In both examples 501 and 502, Acknowledged Mode (AM) Radio Link Control(RLC) is employed, which is particularly suitable for non-real time services requiring reliable data transfer. FIG. **5** schematically illustrates, with reference to the timeline 503, a sequence of events 501 associated with the transmission of a data block , and in particular shows the transmit window 506 including a sequence of RLC Data PDUs (Protocol Data Units) transmitted by the mobile communication network 508 and successfully received by the mobile terminal device 507 within the receive window 505. After successful reception of the data block including the sequence of RLC Data PDUs, a RLC Status Report 514 is sent from the mobile terminal device 507 to the mobile communication network 508 and the next data block 509 including a new sequence of RLC Data PDUs can be transmitted from the mobile communication network 508 to the mobile terminal device 507.

Moreover FIG. 5 schematically illustrates, with reference to the timeline 504, a sequence of events 502 associated with the transmission of a data block when the receiving resource of the mobile terminal device is shared between the first SIM 1, which may be in connected mode and the second SIM 2, which may be in idle mode. The receiving resource of the mobile terminal device may be shared 513, for example, when more than one Receive Chain is stolen from the CONNECTED mode SIM/RAT and the so-called Receive Chain Toggling occurs. This may be due to band conflicts that may exist in parallel to the functional needs of the IDLESIM/RAT , and it is possible that in some cases only the Primary Cell remains available . In this case 502 only part 512 of the sequence of RLC Data PDUs transmitted by the mobile communication network 517 within the transmit window 511 is successfully received by the mobile terminal device 516 within the receive window 510. After that a first RLC Status Report 515 is sent from the mobile terminal device 516 to the mobile communication network 517 a retransmission 518 of the not successfully received sequence of RLC Data PDUs by the mobile communication network 517occurs. However, after the end of the sharing phase 513 a delay, due to the time needed to transmit and receive the first RLC Status Report 515, may generate a so-called "window stalling", wherein this delay may be triggered by a timer. Only after that the retransmission 518 of the not successfully received sequence of RLC Data PDUs by the mobile communication network 517 is completed a new data block 520 can be transmitted by the mobile communication network 517. A second RLC Status Report 519 is sent from the mobile terminal device 516 to the mobile communication network 517 after the retransmission 518 of the not successfully received sequence of RLC Data PDUs by the mobile communication network 517. Due to the "window stalling", the transmission of Data PDU may be delayed, and therefore the data throughput degradation can be significantly high.

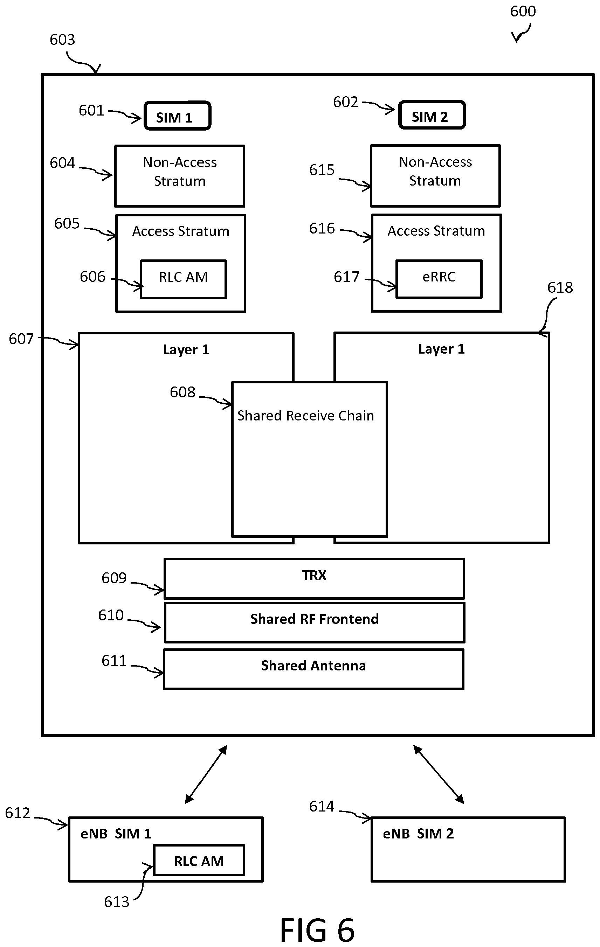

**FIG. 6** is a functional block diagram 600 illustrating a multi SIM mobile terminal device 603, including a first SIM 1 601, which may be in connected mode and a second SIM 2 602, which may be in idle mode. With reference to the first SIM 1 of the mobile terminal device 603, FIG 6 shows the corresponding Non-Access Stratum 604, the Access stratum 605 including the RLC AM block 606, and the Layer 1 607. With reference to the second SIM 2 of the mobile terminal device 603, FIG 6 shows the corresponding Non-Access Stratum 615, the Access stratum 616 including the eRRC block 617, and the Layer 1 618. With reference to the mobile terminal device 603, FIG 6 shows also the shared receiving resource of the mobile terminal device 608, the transceiver 609, the shared RF Frontend 610 and the shared antenna 611. In addition, FIG 6 show also the network node eNB 612 associated with the first SIM 1 and including the RLC AM block and the eNB 614 associated with the second SIM 2.

A Receive Chain sharing may occur for different reasons at the LTE Physical Layer (PHY) when, for example, a Paging Reception or a PLMN search associated with the idle SIM 2 takes place at the transceiver 609. Consequently, the shared Receive Chain 608 may be stolen from the first connected SIM1 and used with first priority by the idle SIM 2. In this case Data PDU may be missed at the receiving window of SIM 1 and therefore a RLC Status Report may be transmitted to the eNB SIM1 612, where an evaluation of the STATUS PDU may occur and consequently the throughput may be throttled due to the retransmission of the missing Data PDU.

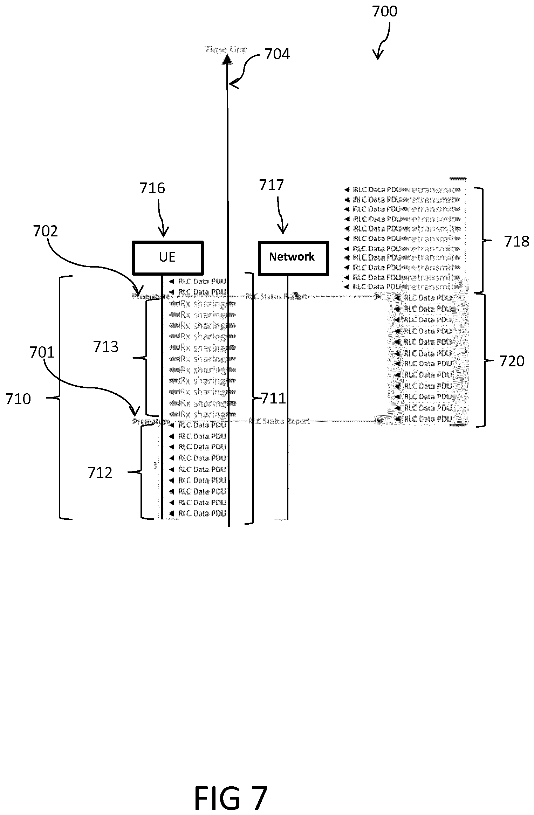

**FIG. 7** schematically illustrates, with reference to the timeline 704 and according to an aspect of this disclosure, a sequence of events associated with the transmission of a data block when the receiving resource of the mobile terminal device is shared 713 between the first SIM 1, which may be in connected mode and the second SIM 2, which may be in idle mode. All successful in sequence received RLC Data PDUs 712 transmitted within the transmit window 711 and received within the receive window 710 may be reported to the mobile communication network 717 by the mobile terminal device 716 via a first premature RLC Status Report 701 transmitted when the RX-Chain sharing starts 713. Anticipating the transmission of the RLC Status Report via the transmission of the first premature RLC Status Report 701 can contribute to avoid a window by moving the receive window 713 at the start of the sharing phase 713.

A second premature RLC Status Report 702 may be sent to the mobile communication network 717 by the mobile terminal device 716 (only if a normal 3GPP related RLC Status Report has not to be sent anyway) at the end of the RX-Chain Sharing Phase 713 to request the retransmission of the lost RLC Data PDUs 718 as soon as possible from the network.

Once the first premature RLC Status Report 701 has been received by the mobile communication network 717, a new data block 720 can be transmitted by the mobile communication network by using a second Receive Chain which is not shared. In this way the new data block 720 is received without any delay with respect to the case when windows stalling occurs increasing the throughput of the connection. This improvement can be achieved if more than one Receive Chain is in operation (number of Secondary Cells that are setup) and that not all the available Receive Chains are toggled. That is, one additional Rx-Chain is still available for reception beside the Rx-Chain that is shared.

The premature RLC Status Report mechanism is particularly efficient when the radio conditions on all Receive Chain are good (either on all Rx-Chains or e.g.as no additional Rx-Chain is available), instead the normal 3GPP related RLC Status Reporting shall take place.

The premature RLC Status Report procedure may be considered as accomplished when all lost RLC Data PDUs that have been associated with a Receive Chain sharing phase are successfully received. Alternatively the premature RLC Status Report procedure may be considered as accomplished in case it is decided that the second premature RLC Status Report is not part of the procedure; in this case the procedure can be considered as accomplished with the end indication of a Receive Chain sharing phase.

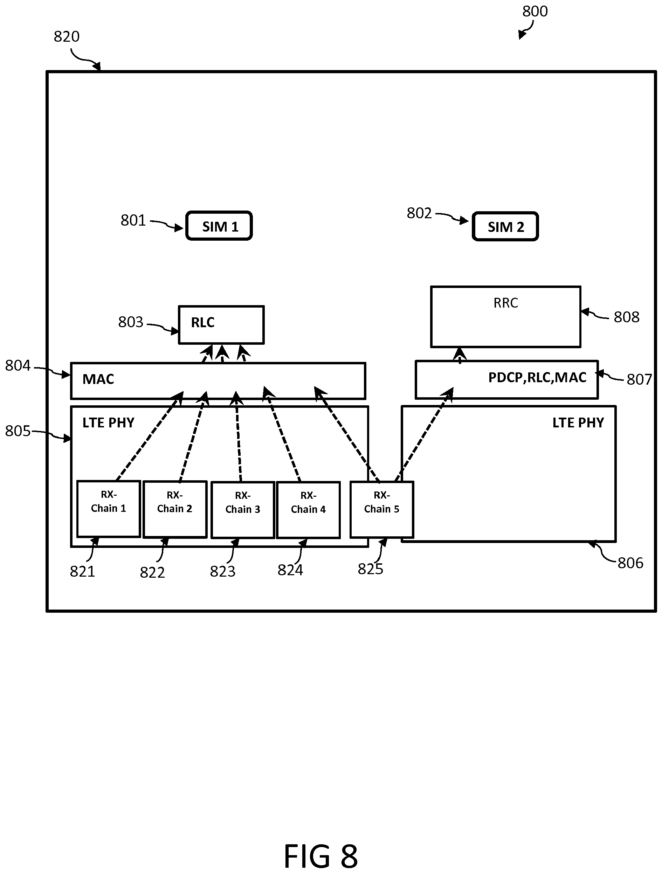

**FIG. 8** is a functional block diagram 800 illustrating a multi SIM mobile terminal device 820, including a first SIM 1 801, which may be in connected mode with Carrier Aggregation (CA) and a second SIM 2 802, which may be in idle mode. With reference to the first SIM 1 of the mobile terminal device 820, FIG 8 shows the corresponding RLC layer 803, the MAC layer 804, and the LTE Physical Layer (PHY) 805. With reference to the second SIM 2 802 of the mobile terminal device 820, FIG 8 shows the corresponding RRC layer 808, the PDCP layer, the RLC layer and the MAC layer 807 and the LTE Physical Layer (PHY) 806. FIG 8 shows also the shared receiving resource of the mobile terminal device 825, and the additional Receiving Chains 821, 822, 823 and 824 available for the first SIM 1. In this way SIM1, which is in CONNECTED mode (CA), may still receive RLC (Radio Link Control) PDUs (Protocol Data Unit) even though one Receive Chain is shared in time between the two SIMs.

For triggering the premature RLC STATUS Report mechanism information is needed at RLC of the CONNECTED mode SIM 1 when an upcoming MULTI-SIM Receive Chain sharing phase starts and when this phase ends. This information, which may be known in advance for activities like PLMN search or Paging reception, may be sent by the LTE PHY 805 that is in CONNECTED mode.

The Rx Chain-Sharing Indication message that may be sent to the RLC layer 803 should be preferably sent early enough to ensure that a premature RLC STATUS Report is transmitted to the mobile network. The lead time for the RxChain-Sharing Indication may be determined by the duration the indication message needs to arrive at the RLC layer 803 and the backlog on the uplink data queue.

An Rx-Chain Sharing Time Pattern message may also be sent together with the Rx Chain-Sharing Indication message. This Rx-Chain Sharing Time Pattern message could deliver a forecast about the periods/phases when the Rx-Chain is toggled away and given back to the CONNECTED mode SIM 801.

In case the IDLE SIM 2 has coverage and the LTE PHY conducts all necessary idle mode Discontinuous Reception Cycle activities, the LTE PHY may indicate the sub phases of a Discontinuous Reception Cycle, like the "Paging+Intra_LTE_Measurement_Activity" phase or the "IRAT_Measurement_Activity" or the "System_Info_Read" or combinations of these.

With reference to FIG. 8 and in case the SIM 2 802 performs a delay tolerant Receive activity (e.g.: PLMN Search) the LTE Physical Layer (PHY) 806 related to SIM2 (or the access stratum) can introduce small artificial gaps or delays in the delay tolerant Receive activity and hand back the Receive-Chain to the CONNECTED mode SIM 1 801 during these artificial gaps.

In order to optimize the user data throughput on the CONNECTED mode SIM in case of Receive Chain sharing the size of the introduced gaps in relation to the RLC receive window may be taken into account. For example the size of the receive window, which can be configured by the network, can be in the range of 0 to 200 ms for LTE. Moreover, the position of the introduced gaps in relation to the RLC receive window may be also taken into consideration, for example at the beginning or at the end of the RLC receive window. In addition, how often the gaps are introduced over a given period in relation to the RLC receive window (e.g. one or several gaps in relation to a given RLC receive window) may also play a role in the optimization process.

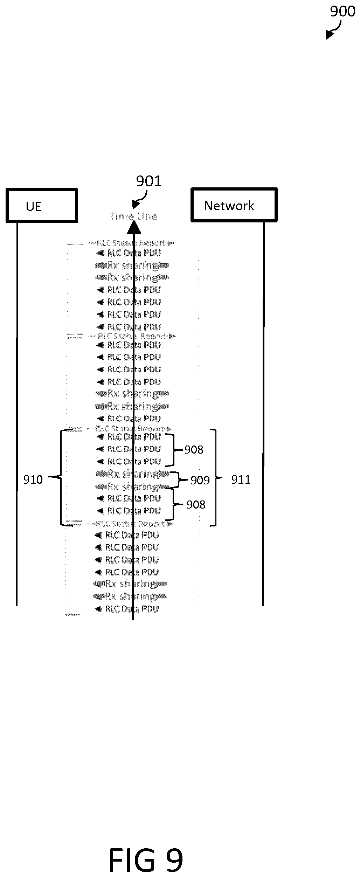

**FIG. 9** schematically illustrates, with reference to the timeline 901 and according to an aspect of this disclosure, a sequence of events 900 associated with the transmission of a data block within the transmit window 911 when the receiving resource of the mobile terminal device is shared 909 between the first SIM 1, which may be in connected mode and the second SIM 2, which may be in idle mode performing a delay tolerant Receive activity (e.g.: PLMN Search). FIG 9 shows that small artificial gaps 908 in the delay tolerant Receive activity 909 have been introduced and that during these artificial gaps 908 the Receive-Chain may be handed back to the CONNECTED mode SIM 1 The size of the receive window 910, the size and the position of the introduced artificial gaps has been optimized in order to improve the throughput.

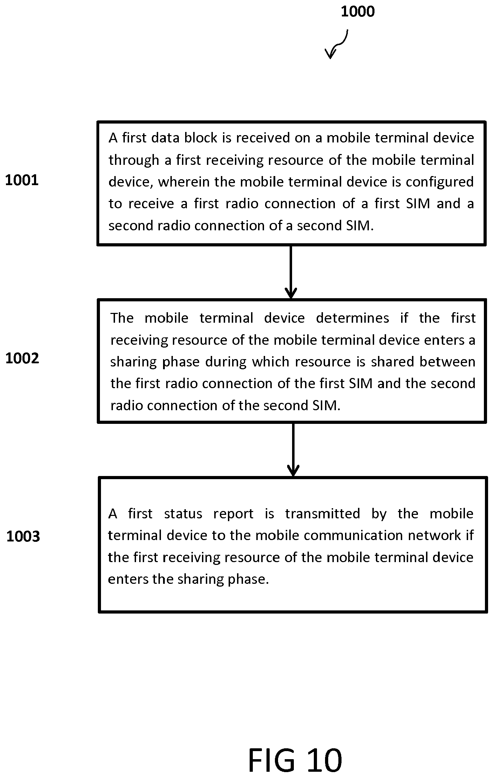

FIG **10** shows a flowchart **1000** according to an aspect of this disclosure. It is appreciated that flowchart 1000 is exemplary in nature and may thus be simplified for purposes of this explanation.

In 1001 a first data block is received on a mobile terminal device through a first receiving resource of the mobile terminal device, wherein the mobile terminal device is configured to allow receive a first radio connection of a first SIM and a second radio connection of a second SIM;

In 1002 the mobile terminal device determines if the first receiving resource of the mobile terminal device starts a sharing phase during which it is shared between the first radio connection of the first SIM and the second radio connection of the second SIM;

In 1003 a first status report is transmitted by the mobile terminal device to the mobile communication network if the first receiving resource of the mobile terminal device starts the sharing phase.

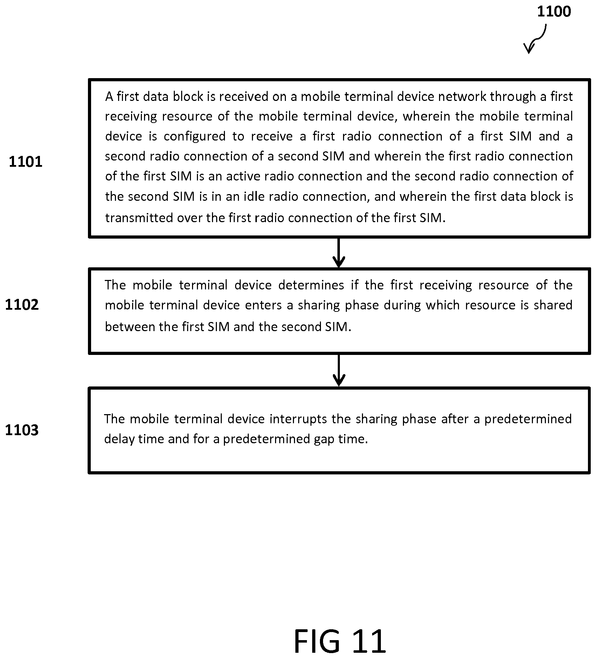

FIG **11** shows a flowchart **1100** according to an aspect of this disclosure. It is appreciated that flowchart 1100 is exemplary in nature and may thus be simplified for purposes of this explanation.

In **1101** a first data block is received on a mobile terminal device network through a first receiving resource of the mobile terminal device, wherein the mobile terminal device is configured to allow a first radio connection of a first SIM and a second radio connection of a second SIM and wherein the first radio connection of the first SIM is an active radio connection and the second radio connection of the second SIM is in an idle radio connection, and wherein the first data block is transmitted over the first radio connection of the first SIM.

In **1102** the mobile terminal device determines if the first receiving resource of the mobile terminal device starts a sharing phase during which it is shared between the first SIM and the second SIM.

In **1103** the mobile terminal device interrupts the sharing phase after a predetermined delay time and for a predetermined gap time.

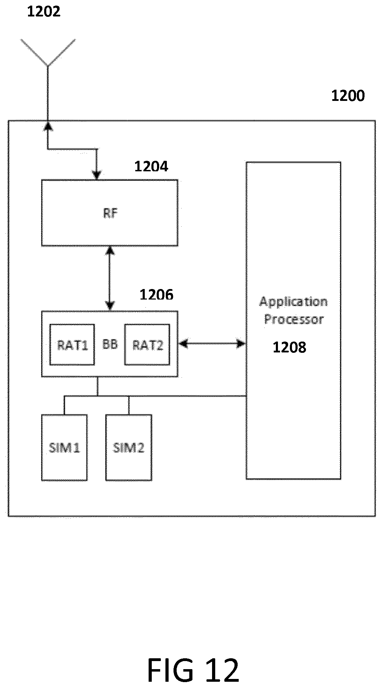

FIG. **12** shows a block diagram illustrating an internal configuration of mobile terminal **1200** according to an aspect of the disclosure. As will be detailed, mobile terminal **1200** may be a device capable of supporting multiple radio connections, such as a multi-SIM device or another mobile device that supports multiple radio access technologies. Mobile terminal device **1200** may be configured to schedule certain reception operations for a second radio connection based on the probable transmission and retransmission times of data blocks for a first radio connection. Mobile terminal **1200** may attempt to ensure that multiple transmissions (including retransmissions) of the same data block are avoided.

As illustrated in FIG. **12****,** mobile terminal **1200** may include antenna **1202,** radio frequency (RF) transceiver **1204,** baseband system **1206**, application processor **1208, SIM1**, and **SIM2**. As shown in in FIG. **12**, the aforementioned components of mobile terminal **1200** may be implemented as separate components. However, it is appreciated that the architecture of mobile terminal **1200** depicted in FIG. **12** is for purposes of explanation, and accordingly one or more of the aforementioned components (or additional components not explicitly shown in FIG. **12**) of mobile terminal **200** may be integrated into a single equivalent component or divided into two separate components with collective equivalence. It is understood that mobile terminal **1200** may have one or more additional components, such as additional hardware, software, or firmware elements. For example, mobile terminal **1200** may further include various additional components including processors/microprocessors, controllers/microcontrollers, memory, other specialty or generic hardware/processors/circuits, etc., in order to support a variety of additional operations. Mobile terminal **1200** may also include a variety of user input/output devices (display(s), keypad(s), touchscreen(s), speaker(s), external button(s), camera(s), microphone(s), etc.), peripheral device(s), memory, power supply, external device interface(s), subscriber identify module(s) (SIM) etc.

It is appreciated that the aforementioned components of mobile terminal **1200**, in particular, RF transceiver **1204**, baseband system **1206**, and application processor 1208 may be implemented in a number of different manners, such as by hardware, firmware, software executed on hardware (e.g. a processor), or any combination thereof. Various options include analog circuit(s), digital circuit(s), logic circuit(s), processor(s), microprocessor(s), controller(s), microcontroller(s), scalar processor(s), vector processor(s), Central Processing Unit(s) (CPU), Graphics Processing Unit(s) (GPU), Digital Signal Processor(s) (DSP), Field Programmable Gate Array(s) (FPGA), integrated circuit(s), or Application Specific Integrated Circuit(s) (ASIC).

As will be detailed, in an aspect of the disclosure mobile terminal **1200** may include a radio processing circuit (RF transceiver **1204**) configured to receive and process radio frequency signals; and one or more baseband modems (baseband system **206**) which may be configured to determine a probability metric for a subframe of a frame, the frame being part of a signal transmitted between a node of a mobile communication network and the mobile terminal device **1200,** wherein the probability metric for the subframe indicates a probability that the subframe is lost during the transmission..

In an abridged overview of the operation of mobile terminal **1200**, mobile terminal **1200** may be configured to receive and/or transmit wireless signals according to multiple different wireless access protocols or radio access technologies (RATs), including any one of, or any combination of, LTE (Long Term Evolution), WLAN (wireless local area network), WiFi, UMTS (Universal Mobile Telecommunications System), GSM (Global System for Mobile Communications), Bluetooth, CDMA (Code Division Multiple Access), Wideband CDMA (W-CDMA), etc. The specific RAT capabilities of mobile terminal **1200** may be dependent on the RAT capabilities of **SIM1** (e.g. as a first radio connection of mobile terminal **1200**), **SIM2** (e.g. as a second radio connection of mobile terminal **1200**), and baseband system **1206**.

Further to the abridged overview of operation of mobile terminal **1200**, RF transceiver **1204** may receive radio frequency wireless signals via antenna **1202**, which may be implemented as e.g. a single antenna or an antenna array composed of multiple antennas. RF transceiver **1204** may include various reception circuitry elements, which may include e.g. analog circuitry, configured to process externally received signals, such as mixing circuity to convert externally received RF signals to baseband and/or intermediate frequencies. RF transceiver **1204** may also include amplification circuitry to amplify externally received signals, such as power amplifiers (PAs) and/or Low Noise Amplifiers (LNAs), although it is appreciated that such components may also be implemented separately. RF transceiver **1204** may additionally include various transmission circuitry elements configured to transmit internally received signals, such as e.g. baseband and/or intermediate frequency signals provided by baseband system **1206,** which may include mixing circuitry to modulate internally received signals onto one or more radio frequency carrier waves and/or amplification circuitry to amplify internally received signals before transmission. RF transceiver **1204** may provide such signals to antenna **1202** for wireless transmission. RF transceiver **1204** may be structurally configured according to various different transceiver architectures dependent on the intended capabilities of mobile terminal **1200**. For example, RF transceiver **1204** may include a single receiver subsystem and single transmitter subsystem, e.g. for a DSDS multi-SIM design. Alternatively, RF transceiver **1204** may include two receiver subsystems and a single transmitter subsystem, e.g. for a DR-DSDS multi-SIM design. Alternatively, RF transceiver **1204** may include two receiver subsystems and two transmitter subsystems, e.g. for a DSDS multi-SIM design. Alternatively, RF transceiver **1204** may include multiple receiver subsystems and multiple transmitter subsystems, e.g. for DSDA multi-SIM designs or for SRLTE or SGLTE designs.

Further references herein to reception and/or transmission of wireless signals by mobile terminal **1200** may thus be understood as an interaction between antenna **1202,** RF transceiver **1204,** and baseband system **1206** as detailed above. Although not explicitly depicted in FIG. **12**, RF transceiver **1204** may be additionally connected to application processor **1208**.

Baseband system **1206** may include RAT system **RAT1** and RAT system **RAT2,** which may each be configured to support at least one radio connection each, where each radio connection may be for the same or different radio access technologies. In a multi-SIM context, **RAT1** and **RAT** may be respectively allocated to **SIM1** and **SIM2** in accordance with a multi-SIM design.

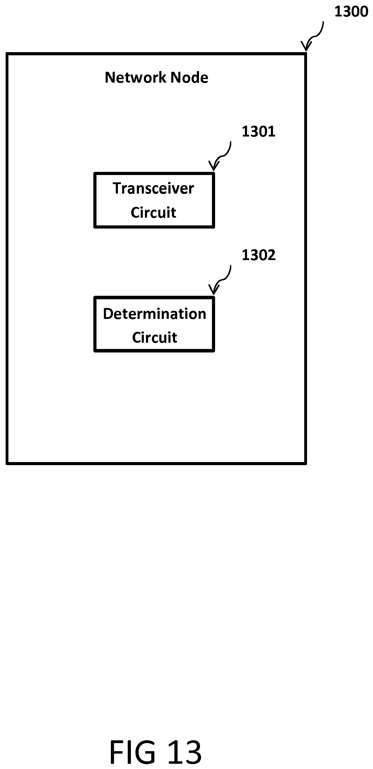

FIG. **13** shows an exemplary mobile radio communication device **1300** that may be, for example, a node of a mobile communication network and, in particular, a base station for a Long Term Evolution (LTE) radio access technology, or for a Universal Mobile Telecommunication System (UMTS) radio access technology, or for a Global System for Mobile Communications (GSM) radio access technology.

The network node **1300** may include a determination circuit **1302** which may be configured to determine if a first status report and a second status report have been transmitted by a mobile terminal device.

The network node **1300** may further include a transceiver circuit **1301** configured to transmit a first data block to a mobile terminal device through a first receiving resource of the mobile terminal device, wherein the mobile terminal device is configured to receive a first radio connection of a first SIM and a second radio connection of a second SIM, and wherein the transceiver circuit is further configured to transmit a second data block to the mobile terminal device through the first receiving resource of the mobile terminal device after that the second status report has been transmitted.

While the above description may focus on certain radio access technologies and radio connectivity states, it is appreciated that the detailed aspects of this disclosure are considered demonstrative in nature, and accordingly may be applied to other mobile devices that support multiple radio connections with the same or different radio access technologies, numbers of SIMs, and/or radio connectivity states

It is appreciated that the terms "user equipment", "UE", "mobile terminal", mobile device, etc., may apply to any wireless communication device, including cellular phones, tablets, laptops, personal computers, and any number of additional electronic devices.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include a one or more components configured to perform each aspect of the related method.

While the invention has been particularly shown and described with reference to specific embodiments, it should be understood by those skilled in the art that various changes in form and detail may be made therein without departing from the scope of the invention as defined by the appended claims..

## Claims

1. A processing method for mobile communication networks, the method comprising:
receiving, on a mobile terminal device, UE, a first data block from a mobile communication network through a first receiving resource of the mobile terminal device, UE, wherein the mobile terminal device, UE, is configured to receive a first radio connection of a first SIM configured to operate in an RRC active mode, while a second SIM is configured to operate in an RRC idle mode;
determining by the mobile terminal device, UE, if the first receiving resource of the mobile terminal device, UE, enters a sharing phase during which the first receiving resource is used by the second SIM operating in RRC idle mode to receive paging, to update its location in a tracking area, and/or for Public Land Mobile Network search;
transmitting by the mobile terminal device, UE, a first premature Radio Link Control, RLC, status report (701) for reporting successfully in sequence received RLC PDUs to the mobile communication network if the first receiving resource of the mobile terminal device, UE, enters the sharing phase.

2. The processing method of claim 1, the method further comprising:
determining by the mobile terminal device, UE, if the first receiving resource of the mobile terminal device, UE, exits the sharing phase;
transmitting by the mobile terminal device, UE, a second premature Radio Link Control, RLC, status report (702) to the mobile communication network for requesting retransmission of lost RLC PDUs if the first receiving resource of the mobile terminal device, UE, exits the sharing phase.

3. The processing method of claim 1, wherein the use of the first receiving resource by the second SIM operating in RRC idle mode has priority over the use of the first receiving resource by the first radio connection of the first SIM.

4. The processing method of any one of claims 1 to 3, wherein the first radio connection of the first SIM is a Long Term Evolution, LTE, radio connection.

5. The processing method of any one of claims 1 to 4, wherein the first data block is received by the Physical Layer associated with the first radio connection of the first SIM if the first receiving resource of the mobile terminal device, UE, is not shared with the second SIM.

6. The processing method of any one of claims 1 to 5, wherein the first SIM and the second SIM are associated with different Cellular Wide Area radio communication networks.

7. The processing method of any one of claims 1 to 6, wherein the mobile terminal device, UE, is a multi-SIM device configured according to a Dual-SIM Dual-Standby, DSDS, design.

8. A mobile terminal device, UE, comprising:
a radio processing circuit configured to receive and process radio frequency signals;
one or more baseband modems configured to receive a first data block from a mobile communication network through a first receiving resource of the mobile terminal device, UE, wherein the mobile terminal device, UE, is configured to receive a first radio connection of a first SIM configured to operate in an RRC active mode, while a second SIM is configured to operate in an RRC idle mode;
a determination circuit configured to determine if the first receiving resource of the mobile terminal device, UE, enters a sharing phase during which the first receiving resource is used by the second SIM operating in RRC idle mode to receive paging, to update its location in a tracking area, and/or for Public Land Mobile Network search;
a transceiver circuit configured to transmit a first premature Radio Link Control, RLC, status report (701) for reporting successfully in sequence received RLC PDUs to the mobile communication network if the first receiving resource of the mobile terminal device, UE, enters the sharing phase.

9. The mobile terminal device, UE, of claim 8, wherein the first SIM and the second SIM are associated with different Cellular Wide Area radio communication networks.

10. The mobile terminal device, UE, of any one of claims 8 or 9, wherein the mobile terminal device, UE, is a multi-SIM device configured according to a Dual-SIM Dual-Standby, DSDS, design.

## Patentansprüche

1. Verarbeitungsverfahren für Mobilkommunikationsnetze, wobei das Verfahren Folgendes umfasst:
Empfangen eines ersten Datenblocks von einem Mobilkommunikationsnetz auf einer mobilen Endgerätevorrichtung, UE, durch ein erstes Empfangsbetriebsmittel der mobilen Endgerätevorrichtung, UE, wobei die mobile Endgerätevorrichtung, UE, konfiguriert ist, eine erste Funkverbindung einer ersten SIM zu empfangen, die konfiguriert ist, in einem RRC-Aktivmodus zu arbeiten, während eine zweite SIM konfiguriert ist, in einem RRC-Leerlaufmodus zu arbeiten;
Bestimmen durch die mobile Endgerätevorrichtung, UE, ob das erste Empfangsbetriebsmittel der mobilen Endgerätevorrichtung, UE, in eine Phase der gemeinsamen Verwendung eintritt, während der das erste Empfangsbetriebsmittel durch die zweite SIM verwendet wird, die im RRC-Leerlaufmodus arbeitet, um ein "Paging" zu empfangen, um ihren Ort in einem Nachverfolgungsbereich zu aktualisieren und/oder zur Suche in öffentlichen Mobilfunknetzen;
Übertragen einer ersten vorzeitigen Funkverbindungssteuerungs-Zustandsmeldung, RLC-Zustandsmeldung, (701) zum Melden von erfolgreich der Reihe nach empfangenen RLC-PDU an das Mobilkommunikationsnetz durch die mobile Endgerätevorrichtung, UE, wenn das erste Empfangsbetriebsmittel der mobilen Endgerätevorrichtung, UE, in die Phase der gemeinsamen Verwendung eintritt.

2. Verarbeitungsverfahren nach Anspruch 1, wobei das Verfahren ferner Folgendes umfasst:
Bestimmen durch die mobile Endgerätevorrichtung, UE, ob das erste Empfangsbetriebsmittel der mobilen Endgerätevorrichtung, UE, die Phase der gemeinsamen Verwendung verlässt;
Übertragen einer zweiten vorzeitigen Funkverbindungssteuerungs-Zustandsmeldung, RLC-Zustandsmeldung, (702) zum Anfordern einer erneuten Übertragung von verloren gegangenen RLC-PDU an das Mobilkommunikationsnetz durch die mobile Endgerätevorrichtung, UE, wenn das erste Empfangsbetriebsmittel der mobilen Endgerätevorrichtung, UE, die Phase der gemeinsamen Verwendung verlässt.

3. Verarbeitungsverfahren nach Anspruch 1, wobei die Verwendung des ersten Empfangsbetriebsmittels durch die zweite SIM, die im RRC-Leerlaufmodus arbeitet, über die Verwendung des ersten Empfangsbetriebsmittels durch die erste Funkverbindung der ersten SIM Priorität aufweist.

4. Verarbeitungsverfahren nach einem der Ansprüche 1 bis 3, wobei die erste Funkverbindung der ersten SIM eine Langzeitentwicklungs-Funkverbindung, LTE-Funkverbindung, ist.

5. Verarbeitungsverfahren nach einem der Ansprüche 1 bis 4, wobei der erste Datenblock durch die physikalische Schicht empfangen wird, die der ersten Funkverbindung der ersten SIM zugeordnet ist, wenn das erste Empfangsbetriebsmittel der mobilen Endgerätevorrichtung, UE, nicht mit der zweiten SIM gemeinsam verwendet wird.

6. Verarbeitungsverfahren nach einem der Ansprüche 1 bis 5, wobei die erste SIM und die zweite SIM verschiedenen Fernbereichs-Mobilfunkkommunikationsnetzen zugeordnet sind.

7. Verarbeitungsverfahren nach einem der Ansprüche 1 bis 6, wobei die mobile Endgerätevorrichtung, UE, eine Mehrfach-SIM-Vorrichtung ist, die gemäß einem Zweifach-SIM-Zweifach-Bereitschafts-Entwurf, DSDS-Entwurf, konfiguriert ist.

8. Mobile Endgerätevorrichtung, UE, die Folgendes umfasst:
eine Funkverarbeitungsschaltung, die konfiguriert ist, Funkfrequenzsignale zu empfangen und zu verarbeiten;
ein oder mehrere Basisbandmodems, die konfiguriert sind, durch ein erstes Empfangsbetriebsmittel der mobilen Endgerätevorrichtung, UE, einen ersten Datenblock von einem Mobilkommunikationsnetz zu empfangen,
wobei die mobile Endgerätevorrichtung, UE, konfiguriert ist, eine erste Funkverbindung einer ersten SIM zu empfangen, die konfiguriert ist, in einem RRC-Aktivmodus zu arbeiten, während eine zweite SIM konfiguriert ist, in einem RRC-Leerlaufmodus zu arbeiten;
eine Bestimmungsschaltung, die konfiguriert ist zu bestimmen, ob das erste Empfangsbetriebsmittel der mobilen Endgerätevorrichtung, UE, in eine Phase der gemeinsamen Verwendung eintritt, während der das erste Empfangsbetriebsmittel durch die zweite SIM verwendet wird, die im RRC-Leerlaufmodus arbeitet, um ein "Paging" zu empfangen, um ihren Ort in einem Nachverfolgungsbereich zu aktualisieren und/oder zur Suche in öffentlichen Mobilfunknetzen;
eine Sende/Empfangs-Schaltung, die konfiguriert ist, eine erste vorzeitige Funkverbindungssteuerungs-Zustandsmeldung, RLC-Zustandsmeldung, (701) zum Melden von erfolgreich der Reihe nach empfangenen RLC-PDU an das Mobilkommunikationsnetz zu übertragen, wenn das erste Empfangsbetriebsmittel der mobilen Endgerätevorrichtung, UE, in die Phase der gemeinsamen Verwendung eintritt.

9. Mobile Endgerätevorrichtung, UE, nach Anspruch 8, wobei die erste SIM und die zweite SIM verschiedenen Fernbereichs-Mobilfunkkommunikationsnetzen zugeordnet sind.

10. Mobile Endgerätevorrichtung, UE, nach einem der Ansprüche 8 oder 9, wobei die mobile Endgerätevorrichtung, UE, eine Mehrfach-SIM-Vorrichtung ist, die gemäß einem Zweifach-SIM-Zweifach-Bereitschafts-Entwurf, DSDS-Entwurf, konfiguriert ist.

## Revendications

1. Procédé de traitement pour des réseaux de communication mobiles, le procédé comprenant de :
recevoir, sur un dispositif terminal mobile, UE, un premier bloc de données à partir d'un réseau de communication mobile par l'intermédiaire d'une première ressource de réception du dispositif terminal mobile, UE, dans lequel le dispositif terminal mobile, UE est configuré pour recevoir une première connexion radio d'un premier SIM configuré pour fonctionner dans un mode RRC actif, tandis qu'un deuxième SIM est configuré pour fonctionner dans un mode RRC inactif;
déterminer, par le dispositif terminal mobile, UE, si la première ressource de réception du dispositif terminal mobile, UE, entre dans une phase de partage au cours de laquelle la première ressource de réception est utilisée par le deuxième SIM fonctionnant dans un mode RRC inactif pour recevoir une radiomessagerie, mettre à jour sa localisation dans une zone de suivi, et/ou effectuer une recherche de réseau mobile terrestre public;
transmettre par le dispositif terminal mobile, UE, un premier rapport d'état de commande de liaison radio, RLC, prématuré (701) pour signaler des PDU RLC reçues en séquence avec succès au réseau de communication mobile si la première ressource de réception du dispositif terminal mobile, UE, entre dans la phase de partage.

2. Procédé de traitement selon la revendication 1, le procédé comprenant en outre de :
déterminer par le dispositif terminal mobile, UE, si la première ressource de réception du dispositif terminal mobile, UE, quitte la phase de partage;
transmettre, par le dispositif terminal mobile, UE, un deuxième rapport d'état de commande de liaison radio, RLC, prématuré (702) au réseau de communication mobile pour demander la retransmission de PDU RLC perdues si la première ressource de réception du dispositif terminal mobile, UE, quitte la phase de partage.

3. Procédé de traitement selon la revendication 1, dans lequel l'utilisation de la première ressource de réception par le deuxième SIM fonctionnant dans le mode RRC inactif est prioritaire par rapport à l'utilisation de la première ressource de réception par la première connexion radio du premier SIM.

4. Procédé de traitement selon l'une quelconque des revendications 1 à 3, dans lequel la première connexion radio du premier SIM est une connexion radio LTE (à évolution à long terme).

5. Procédé de traitement selon l'une quelconque des revendications 1 à 4, dans lequel le premier bloc de données est reçu par la couche physique associée à la première connexion radio du premier SIM si la première ressource de réception du dispositif terminal mobile, UE, n'est pas partagée avec le deuxième SIM.

6. Procédé de traitement selon l'une quelconque des revendications 1 à 5, dans lequel le premier SIM et le deuxième SIM sont associés à des réseaux de communication radio cellulaires étendus différents.

7. Procédé de traitement selon l'une quelconque des revendications 1 à 6, dans lequel le dispositif terminal mobile, UE, est un dispositif multi-SIM configuré selon une conception à double SIM et double veille, DSDS.

8. Dispositif terminal mobile, UE, comprenant :
un circuit de traitement radio configuré pour recevoir et traiter des signaux radiofréquences;
un ou plusieurs modems en bande de base configurés pour recevoir un premier bloc de données à partir d'un réseau de communication mobile par l'intermédiaire d'une première ressource de réception du dispositif terminal mobile, UE, le dispositif terminal mobile, UE est configuré pour recevoir une première connexion radio d'un premier SIM configuré pour fonctionner dans un mode RRC actif, tandis qu'un deuxième SIM est configuré pour fonctionner dans un mode RRC inactif;
un circuit de détermination configuré pour déterminer si la première ressource de réception du dispositif terminal mobile, UE, entre dans une phase de partage au cours de laquelle la première ressource de réception est utilisée par le deuxième SIM fonctionnant dans le mode RRC inactif pour recevoir une radiomessagerie, mettre à jour sa localisation dans une zone de suivi, et/ou effectuer une recherche de réseau mobile terrestre public;
un circuit émetteur-récepteur configuré pour transmettre un premier rapport d'état de commande de liaison radio, RLC, prématuré (701) pour signaler des PDU RLC reçues en séquence avec succès au réseau de communication mobile si la première ressource de réception du dispositif terminal mobile, UE, entre dans la phase de partage.

9. Dispositif terminal mobile, UE, selon la revendication 8, dans lequel le premier SIM et le deuxième SIM sont associés à des réseaux de communication radio cellulaires étendus différents.

10. Dispositif terminal mobile, UE, selon l'une quelconque des revendications 8 ou 9, dans lequel le dispositif terminal mobile, UE, est un dispositif multi-SIM configuré selon une conception à double SIM et double veille, DSDS.
